(19) Europäisches Patentamt / European Patent Office / Office européen des brevets

(11) **EP 4 628 560 A1**

(12) **EUROPEAN PATENT APPLICATION**
published in accordance with Art. 153(4) EPC


(43) Date of publication:
**08.10.2025 Bulletin 2025/41**

(21) Application number: **24853011.5**

(22) Date of filing: **24.09.2024**

(51) International Patent Classification (IPC):
***C09K 11/02*** *(2006.01)* ***C09K 11/06*** *(2006.01)*
***G01N 21/64*** *(2006.01)*

(86) International application number:
**PCT/CN2024/120646**

(87) International publication number:
**WO 2025/167122 (14.08.2025 Gazette 2025/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**



(71) Applicant: **GUANGZHOU BLUEMOON INDUSTRIAL CO., LTD.**
**Huangpu District**
**Guangzhou**
**Guangdong 510700 (CN)**

(72) Inventors:
- **JIANG, Zan**
  **Guangdong 510700 (CN)**
- **ZHAO, Haodong**
  **Guangdong 510700 (CN)**
- **ZHENG, Xianglong**
  **Guangdong 510700 (CN)**

(74) Representative: **Vossius & Partner**
**Patentanwälte Rechtsanwälte mbB**
**Siebertstrasse 3**
**81675 München (DE)**


(54) **ACQ FLUORESCENT PROBE COMPOSITION, CMC DETERMINATION METHOD, STAIN REMOVAL CONCENTRATION DETERMINATION METHOD, AND DETERGENT DISPENSING CONTROL METHOD AND SYSTEM**


(57) The present invention provides an ACQ fluorescence probe composition, characterized in that the ACQ fluorescence probe composition is a probe solution for directly determining the cmc concentration of a surfactant and includes a probe molecule and an auxiliary agent, wherein the probe molecule is a fluorescent molecule with aggregation-caused quenching (ACQ) property, the auxiliary agent includes one or more non-volatile organic solvents having a boiling point above 100°C, and a distance of Hansen solubility parameters i.e., an HSP distance Ra between the probe molecule and the organic solvent,, is below 17 $(MPa)^{1/2}$. The present invention further provides a cmc determination method, a stain cleaning concentration determination method, a detergent dispensing control method, and a detergent dispensing control system using the ACQ fluorescence probe composition.


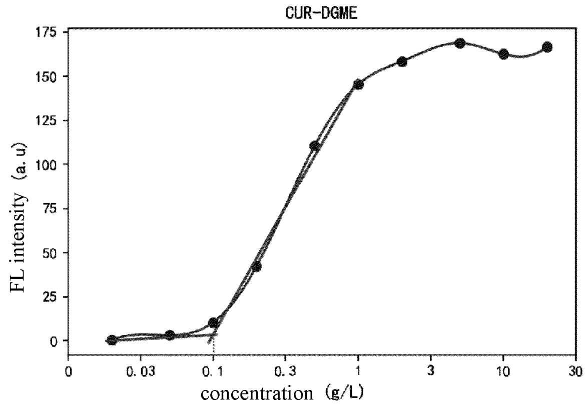


Fig. 2

EP 4 628 560 A1

## Description

### Technical Field

The present invention relates to an ACQ fluorescence probe composition, a cmc determination method, a stain cleaning concentration determination method, a detergent dispensing control method and a detergent dispensing control system using the ACQ fluorescence probe composition.

### Background Art

Detergents generally consist of surfactants, builders, and additives etc. For current automatic washing equipment, the addition of detergents relies mainly on the weight of the fabric load. However, there are significant differences in the dispensing amount of detergents among different brands of washing machines, resulting in poor universality and flexibility for different detergents and washing scenarios.

The inventors have found through research that when the concentration of a surfactant in washing water reaches a critical micelle concentration (cmc), the washing effect reaches the best cost-effectiveness balance point. Therefore, it is desirable to monitor whether the concentration of a surfactant in washing water has reached the cmc as a determination basis for automatic detergent dispensing.

In addition, cleaning laundry with different stains requires different detergent concentrations, which may be greater than or equal to the above critical micelle concentration (cmc). Therefore, different threshold concentrations can be determined for oil stains, color stains, and invisible stains. When the concentration of the detergent in washing water is detected to have reached or exceeded the threshold concentration, the stains can be expected to be cleaned. Therefore, it is also desirable to monitor whether the concentration of a surfactant in washing water has reached a threshold concentration as a determination basis for automatic detergent dispensing.

That is to say, the determination basis of the automatic dispensing control of a detergent may include the following two patterns: utilizing cmc as a determination basis for the highest cost-effective point, with the highest cleaning efficiency at this concentration; and utilizing a stain cleaning threshold concentration as a determination basis for the stain cleaning degree, with the best cleaning effect at this concentration. Typically, the stain cleaning threshold concentration is $\geq$ cmc.

The conventional methods for detecting the cmc of a surfactant include surface tension method, conductivity method, and fluorescence probe method. However, the surface tension method requires a series of complicated operations; the conductivity method cannot be used to detect non-ionic surfactants and surfactants with low conductivity; the fluorescence probe method has the problems of low sensitivity and accuracy of probes. For example, pyrene is often used as a probe in the fluorescence probe method to determine the cmc by determining the fluorescence intensity and ratio of the first and third emission peaks (373 nm and 384 nm) of pyrene. However, when the pyrene probe is used for the on-line determination of the cmc, there may be the problem of a shifted peak, which results in the selected 373 nm and 384 nm are not the peak inflection points, leading to insufficient detection sensitivity. It is necessary to find a probe molecule with more suitable fluorescence properties. In addition, the current fluorescence spectrophotometers also have the problems of difficult miniaturization of instruments or equipment and high cost.

Fluorescence probe molecules are broadly divided into aggregation-induced emission (AIE) molecules that employ an AIE strategy and aggregation-caused quenching (ACQ) molecules that employ an ACQ strategy. An AIE fluorescence probe composition comprising an AIE molecule and an auxiliary agent has previously been successfully developed (Patent Document 1). However, compared with AIE molecules, ACQ molecules have a wide range of types and sources, and most ACQ molecules have efficient preparation methods and commercially available products. Moreover, compared with AIE molecules, ACQ molecules have lower probe costs and higher application cost-effectiveness while ensuring similar detection accuracy. Therefore, it is desirable to develop an inexpensive and simple-to-use ACQ fluorescence probe composition that can be used in various scenarios, such as monitoring the cmc of washing water, with great application prospects.

The current problem is that most ACQ probe molecules used to determine the cmc are poorly water-soluble substances. In order to dissolve these hydrophobic substances, they are usually dissolved in organic solvents such as tetrahydrofuran and ethanol. However, it is generally recognized in the art that the presence of these organic solvents may cause a deviation in the determination result of the cmc. Therefore, in order to avoid such a problem, it is necessary to control the amount of the organic solvents to a very small amount (Non-Patent Document 1) or to remove the volatile organic solvents by evaporating them or waiting for them to volatilize naturally before the determination (Non-Patent Documents 2 and 3). Since these organic solvents are easy to volatilize, ACQ probe solutions are not easy to be stored and preserved for a long time in actual application environments or need to be treated in advance for use, resulting in complicated operations of cmc determination processes, decreased accuracy of determination and sampling, and lack of convenience in use.

Prior Art Document

Patent Document

Patent Document 1: CN116554861A

Non-Patent Document

Non-Patent Document 1: "Role of Curcumin on The Determination of The Critical Micellar Concentration by Absorbance, Fluorescence and Fluorescence Anisotropy Techniques, J Photochem. Photobiol., B, 2012, 115(3), 9-15
Non-Patent Document 2: Determination of Critical Micelle Concentration of CTAB by Pyrene Fluorescence Probe Spectrometry, Petrochemical Technology & Application, 2007, 25 (1), 48-50
Non-Patent Document 3: Fluorescence Emission of Pyrene in Surfactant Solution, Advance in Colloid and Interface Science, 215 (2015), 1-12

**Summary of the Invention**

Problems to be solved by the present invention

The present invention is made in view of the above, with the aim of providing an inexpensive and simple-to-use ACQ fluorescence probe composition that can be stored as a stable solution for a long time and can be directly used for determining the cmc concentration of a surfactant solution. The present invention further provides a cmc determination method for a surfactant solution, a stain cleaning concentration determination method, and a detergent dispensing control method based on the ACQ fluorescence probe composition.

Methods to solve the problems

The inventors have intensively studied the above problems and found that by using a specific combination of an ACQ probe molecule and an auxiliary agent, not only can the ACQ molecule be well dissolved in the auxiliary agent to form a stable probe solution capable of long-term preservation for directly determining the cmc of a surfactant solution, but also the effect of the presence of the auxiliary agent on the determination result of the cmc is controlled within an allowable range, so that an accurate determination result can be obtained, thereby solving the above problems well.

The present invention provides an ACQ fluorescence probe composition, characterized in that the ACQ fluorescence probe composition is a probe solution for directly determining the cmc concentration of a surfactant and comprises a probe molecule and an auxiliary agent, wherein the probe molecule is a fluorescent molecule with aggregation-caused quenching (ACQ) property, the auxiliary agent comprises one or more non-volatile organic solvents having a boiling point above 100°C, and a distance of Hansen solubility parameters i.e., an HSP distance Ra between the probe molecule and the organic solvent,, is below 17 $(MPa)^{1/2}$.

Preferably, the Hansen solubility parameter (HSP) $\delta$ of the probe molecule is 15 $(MPa)^{1/2}$ to 35 $(MPa)^{1/2}$.

Preferably, the solubility classification of the probe molecule in the auxiliary agent is above "soluble."

Preferably, the difference of Hansen solubility parameters ($\Delta\delta$) between the auxiliary agent and the probe molecule is -3 $(MPa)^{1/2}$ to +12 $(MPa)^{1/2}$.

Preferably, the viscosity of the auxiliary agent is below 30 mPa·s.

Preferably, the auxiliary agent soluble with water and has a density of 0.9 $g/cm^3$ to 1.2 $g/cm^3$. Preferably, the flash point of the auxiliary agent is above 60°C.

Preferably, the probe molecule is an ACQ molecule with a luminescence strategy based on a change in fluorescence intensity or a change in characteristic wavelength, including an ACQ molecule with a blue-shifted characteristic wavelength, an ACQ molecule with a red-shifted characteristic wavelength, and an ACQ molecule with an unchanged characteristic wavelength.

Preferably, the probe molecule is one or more kinds of ACQ molecules selected from curcumin (CUR), Nile red (NR), coumarin (C480), rhodamine B (RhB), N-phenyl-1-naphthylamine (NPN), and pyrene (PYR).

Preferably, the auxiliary agent comprises one or more kinds of organic solvents selected from n-butanol, ethylene glycol, N-methylpyrrolidone (NMP), N-ethylpyrrolidone (NEP), dimethylformamide (DMF), diethylene glycol monoethyl ether (DGME), ethyl glycolate, polyethylene glycol 200 (PEG200), 1,3-butanediol, and 1,5-pentanediol.

Preferably, the probe molecule is at least one kind of ACQ molecule selected from curcumin (CUR), Nile red (NR),

and coumarin (C480), and the auxiliary agent comprises at least one kind of organic solvent selected from N-methylpyrrolidone (NMP), N-ethylpyrrolidone (NEP), polyethylene glycol 200 (PEG200), and diethylene glycol monoethyl ether (DGME).

The present invention further provides a cmc determination method for a surfactant solution, characterized in that the cmc determination method sequentially comprises the following steps:

liquid preparation step: preparing surfactant solutions with a series of concentrations,
probe addition step: adding a certain amount of a probe solution to each of the surfactant solutions,
detection step: detecting a fluorescence response value of each surfactant solution using a detection means, and
determination step: plotting a fluorescence response value-concentration curve having at least a first plateau region and a rising region according to the results obtained in the detection step and determining the concentration corresponding to the inflection point where the fluorescence response value changes from the first plateau region to the rising region as the cmc of the surfactant solution,
wherein the probe solution is the above ACQ fluorescence probe composition of the present invention.

Preferably, in the determination step, the concentration corresponding to the intersection point of the fitted line of the first plateau region and the fitted line of the rising region in the fluorescence response value-concentration curve is determined as the cmc of the surfactant solution.

Preferably, with respect to 10 ml of the surfactant solution, the addition amount of the solvent of the probe solution is not more than 400 μl, and the probe working concentration of the probe molecule is not more than 10 ug/ml.

Preferably, the surfactant comprises at least one of an anionic surfactant, a non-ionic surfactant, and an amphoteric surfactant.

Preferably, the surfactant solution further comprises a fluorescent brightener.

The present invention further provides a stain cleaning concentration determination method, characterized in that the stain cleaning concentration determination method comprises the following steps:

liquid preparation step: dispensing a first predetermined amount of a detergent into washing equipment containing a predetermined amount of water and laundry, stirring and mixing well to obtain a washing water,
sampling step: sampling from the washing water and adding a small amount of a probe solution to obtain a washing water to be tested,
detection step: detecting a fluorescence response value S of the washing water to be tested using a detection means,
determination step: determining whether the concentration of the detergent in the washing water to be tested is a stain cleaning concentration according to whether the detected fluorescence response value S has reached or exceeded a preset cleaning response threshold $S_0$, wherein if the preset cleaning response threshold $S_0$ is not reached, the determination result is "No"; if the preset cleaning response threshold $S_0$ has been reached or exceeded, the determination result is "Yes," and
control step: controlling subsequent dispensing of the detergent in the liquid preparation step based on the determination result of the determination step, wherein if the determination result is "No," the process returns to the liquid preparation step to continue dispensing a second predetermined amount of the detergent, and subsequent sampling step, detection step, and determination step are performed; if the determination result is "Yes," the dispensing of the detergent is stopped, and the determination result is outputted,
wherein the probe solution is the above ACQ fluorescence probe composition of the present invention.

Preferably, the cleaning response threshold $S_0$ is a fluorescence response value corresponding to the critical micelle concentration cmc of the washing water or a fluorescence response value corresponding to a stain cleaning threshold concentration Ct,

the stain cleaning threshold concentration Ct is the minimum concentration required for cleaning laundry with different stains, determined by Equation 3 below:

$$Ct = cmc \times (1 + a) \qquad \text{(Equation 3)}$$

where cmc is the critical micelle concentration of the washing water, a is a cleaning coefficient in the range of $0 \leq a \leq 10$, and a may be different values corresponding to different types and degrees of stains.

Preferably, the cleaning response threshold $S_0$ is determined by Equations 4 or 5 below:

$$S_0 = \beta \times S_{max} \qquad \text{(Equation 4)}$$

$$S_0 = S_{blank} + \beta \times (S_{max} - S_{blank}) \qquad \text{(Equation 5)}$$

where $S_{max}$ is the maximum fluorescence intensity or the maximum voltage response value of the washing water, or the second plateau value in the fluorescence response value-concentration curve of the washing water; $S_{blank}$ is the background fluorescence intensity or the minimum voltage response value of the washing water, or the first plateau value in the fluorescence response value-concentration curve of the washing water; $\beta$ is a threshold percentage, in unit of 100%, in the range of $0 < \beta < 1$, and $\beta$ may be different values corresponding to different types and degrees of stains.

The present invention further provides a detergent dispensing control method, characterized in that the detergent dispensing control method comprises the following steps:

liquid preparation step: dispensing a first predetermined amount of the detergent into an inner drum in washing equipment according to the weight of washings and the amount of water fed, mixing and stirring with the water in the inner drum to obtain a washing water or a detergent solution;
sampling step: collecting a predetermined amount of the washing water or the detergent solution from the inner drum as a sample;
liquid taking out step: taking out a small amount of a probe solution and adding it to the sample; mixing step: mixing the sample and the probe solution to obtain a liquid to be tested;
detection step: detecting a fluorescence response value of the liquid to be tested and outputting a detection signal S;
determination step: receiving the detection signal S and determining whether the concentration of the detergent in the liquid to be tested has reached a critical micelle concentration cmc or a preset cleaning threshold concentration Ct according to whether the detection signal S has reached or exceeded a preset response threshold $S_0$, wherein the cleaning threshold concentration Ct is greater than or equal to the critical micelle concentration cmc; and
control step: controlling subsequent dispensing of the detergent based on the determination result of the determination step, wherein if the determination result is that the critical micelle concentration or the preset cleaning threshold concentration is not reached, the process returns to the liquid preparation step to continue dispensing a second predetermined amount of the detergent into the inner drum; if the determination result is that the critical micelle concentration or the preset cleaning threshold concentration has been reached, the dispensing of the detergent is stopped,
wherein the probe solution is the above ACQ fluorescence probe composition of the present invention.

Preferably, the control step further comprises a number of times limiting step: presetting a number of times threshold indicating the maximum number of times of dispensing of the detergent, wherein if the determination result of the determination step remains that the critical micelle concentration or the preset cleaning threshold concentration is not reached after one or more times of dispensing of the detergent, but the number of times of dispensing of the detergent has reached the number of times threshold, the dispensing of the detergent in the liquid preparation step is stopped.

The present invention further provides a detergent dispensing control system for automatically controlling the dispensing of a detergent in washing equipment, the washing equipment comprising: an inner drum for holding washings to be washed and water; a storage device for storing a detergent; and a dispensing device for dispensing a first predetermined amount of the detergent into the inner drum, mixing and stirring with the water in the inner drum to obtain a washing water or a detergent solution, characterized in that,
the detergent dispensing control system comprises:

a liquid storage device for storing a probe solution;
a sampling device for collecting a predetermined amount of the washing water or the detergent solution from the inner drum as a sample;
a liquid-taking out device for taking out a small amount of the probe solution from the liquid storage device and adding it to the sample;
a mixing device for mixing the sample and the probe solution to obtain a liquid to be tested;
a detection device for detecting a fluorescence response value of the liquid to be tested and outputting a detection signal S;
a determination device for receiving the detection signal S and determining whether the concentration of the detergent in the liquid to be tested has reached a critical micelle concentration cmc or a preset cleaning threshold concentration Ct according to whether the detection signal S has reached or exceeded a preset response threshold $S_0$, wherein the cleaning threshold concentration Ct is greater than or equal to the critical micelle concentration cmc;
a cmc determination device for dispensing a predetermined amount of the detergent into the inner drum in batches

using the dispensing device when there are no washings in the inner drum, repeatedly performing multiple sets of determinations using the liquid storage device, the sampling device, the liquid-taking out device, the mixing device, and the detection device, and determining the critical micelle concentration of the detergent solution according to multiple detection data corresponding to different detergent concentrations output by the detection device; and

a control device for controlling the subsequent dispensing of the detergent by the dispensing device of the washing equipment based on the determination result of the determination device,

wherein if the determination result of the determination device is that the critical micelle concentration cmc or the preset cleaning threshold concentration Ct is not reached, the control device controls the dispensing device to continue dispensing a second predetermined amount of the detergent into the inner drum of the washing equipment; if the determination result of the determination device is that the critical micelle concentration cmc or the preset cleaning threshold concentration Ct has been reached or exceeded, the control device controls the dispensing device to stop dispensing the detergent;

wherein the probe solution is the above ACQ fluorescence probe composition of the present invention.

Preferably, the cleaning response threshold $S_0$ is a fluorescence response value corresponding to the critical micelle concentration cmc of the detergent solution or a fluorescence response value corresponding to the stain cleaning threshold concentration Ct,

the critical micelle concentration cmc is a pre-determined critical micelle concentration of the detergent solution, or a critical micelle concentration of the detergent solution or washing water determined on-line by the cmc determination device,

the cleaning threshold concentration Ct is calculated using Equation 3 below:

$$Ct = cmc \times (1 + a) \qquad \text{(Equation 3)}$$

where a is a cleaning coefficient in the range of $0 \le a \le 10$, and a may be different values corresponding to different types and degrees of stains;

or the cleaning response threshold $S_0$ is determined by Equations 4 or 5 below:

$$S_0 = \beta \times S_{max} \qquad \text{(Equation 4)}$$

$$S_0 = S_{blank} + \beta \times (S_{max} - S_{blank}) \qquad \text{(Equation 5)}$$

where $S_{max}$ is the maximum fluorescence intensity or the maximum voltage response value of the washing water, or the second plateau value in the fluorescence response value-concentration curve of the washing water; $S_{blank}$ is the background fluorescence intensity or the minimum voltage response value of the washing water, or the first plateau value in the fluorescence response value-concentration curve of the washing water; β is a threshold percentage, in unit of 100%, in the range of $0 < \beta < 1$, and β may be different values corresponding to different types and degrees of stains.

Preferably, the control device further sets a number of times threshold indicating the maximum number of times of dispensing of the detergent, wherein if the determination result of the determination device remains that the critical micelle concentration or the preset cleaning threshold concentration is not reached after one or more times of dispensing of the detergent by the dispensing device but the number of times of dispensing of the detergent has reached the number of times threshold, the control device controls the dispensing device to stop dispensing the detergent.

Effect of the invention

The ACQ fluorescence probe composition of the present invention uses a specific combination of an ACQ probe molecule and an auxiliary agent, so that the ACQ molecule can be dissolved in the auxiliary agent to form a stable probe solution which can be stored for a long time, thus has good operability in determination, and can accurately detect the cmc within a suitable concentration range, thereby providing an inexpensive and easy-to-use ACQ fluorescence probe composition, which can be expected to be applied to a wide range of fields including washing industry, detergent industry, and washing machine industry.

By using the above ACQ fluorescence probe composition, it is possible to provide a more convenient and accurate cmc determination method, a stain cleaning concentration determination method for on-line determination of whether laundry with different stains can be cleaned or not, and a detergent dispensing control method and a detergent

dispensing control system for automatically controlling the dispensing amount of a detergent in washing equipment based on cost-effectiveness or cleaning effect.

## Brief Description of the Drawings

Fig. 1 is a graph showing the results of the fluorescence spectrum of the ACQ fluorescence probe composition (CUR-DGME) of Example 1 of the present invention in various concentrations of Supreme Biotechnology (Brilliant White) detergent solution (abbreviated as ZZLB), determined by a fluorescence spectrophotometer.

Fig. 2 is a graph showing a fluorescence response value-detergent concentration curve of the ACQ fluorescence probe composition (CUR-DGME) of Example 1 of the present invention, plotted by selecting the peak height data of fluorescence intensity at the maximum emission wavelength Em = 495 nm as fluorescence response values, and the cmc value or cmc range is determined using the fitted line intersection method.

Fig. 3 is a graph showing a fluorescence response value-detergent concentration curve of the ACQ fluorescence probe composition (NR-NMP) of Example 2 of the present invention in various concentrations of Supreme Biotechnology (Brilliant White) washing water, plotted by using voltage values determined by a fluorescence photoelectric detector (customized detector, abbreviated as CD detector) as fluorescence response values. The cmc value or cmc range is determined using the inflection point method.

Fig. 4 is a graph showing fluorescence response value-detergent concentration curves obtained by determining the cmc of Supreme Biotechnology (Brilliant White) detergent solution (abbreviated as ZZLB) using various ACQ fluorescence probe compositions in Example 3 of the present invention, in which (A) illustrates CUR probe composition, with auxiliary agents of BUT, EG, NMP, and PEG200 (labeled as PEG in the figure), respectively; (B) illustrates NR probe composition, with auxiliary agents of BUT, NMP, and PEG200, respectively.

Fig. 5 is a graph showing the curves obtained by determining the cmc of various brands of detergent solutions using the surface tension method in Example 4 of the present invention.

Fig. 6 is a graph showing fluorescence response value-detergent concentration curves obtained by determining the cmc of various brands of detergent solutions using two ACQ fluorescence probe compositions of the present invention in Example 4 of the present invention, in which (A) illustrates CUR probe composition; (B) illustrates NR probe composition.

Fig. 7 is a graph showing fluorescence response value-detergent concentration curves obtained by testing the cmc of detergent solutions or washing water in different scenarios using two ACQ fluorescence probe compositions in Example 5 of the present invention, in which (A) illustrates CUR probe composition; (B) illustrates NR probe compositions.

Fig. 8 is a graph showing fluorescence response value-detergent concentration curves obtained by testing the cmc of other types of products (softener, oxygen bleaching agent, disinfectant) containing a surfactant component using two ACQ fluorescence probe compositions in Example 6 of the present invention, in which (A) illustrates CUR probe composition; (B) illustrates NR probe composition.

## Detailed Description of the Invention

Hereinafter, specific embodiments of the present invention will be described in detail, but the present invention is not limited to any of the following embodiments and may be suitably modified within the scope of the present invention.

In the specification, the numerical range indicated by "~" means a range including the numerical values recited before and after "~" as the minimum and maximum values, respectively. Where not specifically stated, the maximum and minimum values indicating each preferred range may be combined.

In the specification, "surfactant solution" means an aqueous solution containing a surfactant. In the case where the surfactant is used for washing clothes or items (simply referred to as laundry or washings), the surfactant is referred to as a "detergent," and an aqueous solution of the surfactant is simply referred to as a "detergent solution" or "washing water." Specifically, an aqueous solution obtained by directly preparing and diluting a detergent with water is referred to as a "detergent solution," including an aqueous solution obtained by using an inner drum of an industrial water washing equipment or a domestic washing machine as a container and adding the detergent and water without adding clothes and fabric load; on the other hand, a detergent solution obtained by putting clothes or fabrics into an industrial water washing equipment or a domestic washing machine, adding the detergent and water, and mixing the detergent and water by an inner drum is referred to as "washing water." In addition, with regard to the concentration of the surfactant, in the case where a plurality of surfactant components are present in the surfactant solution, it means the total concentration of the plurality of surfactant components present in the surfactant solution, unless otherwise specified.

In the specification, "fluorescence response value" means the FL fluorescence intensity (a.u) when measured by

a fluorescence spectrophotometer and means the response voltage value (V) when measured by a fluorescence photoelectric detector (simply referred to as CD detector).

In addition, in the specification, the Hansen solubility parameter HSP value ($\delta$d, $\delta$p, $\delta$h) and the HSP distance Ra are both in units of $(MPa)^{1/2}$. However, for the sake of brevity, the units of the Ra value and the HSP value are sometimes omitted and only expressed as numerical values.

**(ACQ fluorescence probe composition)**

The ACQ fluorescence probe composition of the present invention is characterized in that the ACQ fluorescence probe composition is a probe solution for directly determining the cmc concentration of a surfactant and comprises a probe molecule and an auxiliary agent, wherein the probe molecule is a fluorescent molecule with aggregation-caused quenching (ACQ) property, and the auxiliary agent comprises one or more non-volatile organic solvents having a boiling point above 100°C; a distance Ra between the Hansen solubility parameters of the probe molecule and the organic solvent is below 17 $(MPa)^{1/2}$.

In the present invention, "directly determining" means that the ACQ fluorescence probe composition of the present invention can be directly added to a solution to be tested in the state of the probe solution without pretreatment (e.g., waiting for the organic solvent to volatilize after adding the solution to be tested) for subsequent cmc determination.

In the present invention, "non-volatile" means the property that the organic solvent maintains its volume through long-term storage at normal temperature and pressure. In general, the higher the boiling point of the organic solvent, the lower the volatility. Therefore, in the present invention, it is specified that the organic solvent included in the auxiliary agent has a boiling point above 100°C and thus is non-volatile. In the case where the organic solvent is non-volatile, it is considered that the probe solution formed by dissolving the probe of the present invention in the auxiliary agent is stable and can be stored for a long time.

In the present invention, the Hansen solubility parameter (HSP) is used to measure the molecular polarity and intermolecular forces of the ACQ probe molecule. The Hansen solubility parameter is sometimes appropriately labeled as "HSP" in the following description. In order to be able to form a stable probe solution in an aqueous system of a surfactant solution and to show a pronounced aggregation-caused quenching (ACQ) phenomenon at a suitable cmc concentration, the Hansen solubility parameter $\delta$ of the ACQ probe molecule of the present invention is preferably set to 15 $(MPa)^{1/2}$ to 35 $(MPa)^{1/2}$, more preferably 20 $(MPa)^{1/2}$ to 25 $(MPa)^{1/2}$. In the specification, the unit of the Hansen solubility parameter is sometimes omitted, i.e., the Hansen solubility parameter $\delta$ is preferably 15 to 35, more preferably 20 to 25.

Furthermore, the distance Ra between the Hansen solubility parameters (HSPs) can be used to predict the solubility of the ACQ probe molecule in the organic solvent. In general, when the absolute value of the HSP distance Ra between the ACQ probe molecule and the organic solvent is below 17, it can be considered that the ACQ probe molecule can be sufficiently dissolved in the organic solvent to form a relatively stable probe solution.

In the auxiliary agent of the present invention, the organic solvent that meets the above requirements may be used alone or in combination. In addition, besides the above non-volatile organic solvent as an essential component, the auxiliary agent may include a small amount of a volatile organic solvent or an inorganic solvent (e.g., water) as an optional component, without affecting the solubility of the probe or the accuracy of the cmc determination results. That is to say, in the present invention, the auxiliary agent may be only one organic solvent, a mixed solvent of a plurality of organic solvents, or a mixed solvent of an organic solvent and an inorganic solvent.

The content of the non-volatile organic solvent included in the auxiliary agent is not particularly limited. As an essential component, its content is more than 0% and may be above 10% by volume, preferably above 30% by volume, more preferably above 50% by volume, further preferably above 70% by volume, still further preferably above 90% by volume, and most preferably 100% by volume.

In order to form a stable and clear probe solution with sufficient probe stock solution concentration, the ACQ probe molecule of the present invention must have good solubility in the organic solvent as the auxiliary agent.

When the ACQ probe molecule is soluble in the auxiliary agent, the cmc can sometimes be determined even if the solubility is low, so that a conventional quantitative description of solubility may not be able to characterize it accurately, and considering the applicability to different probe molecules, in the present invention, the solubility of the ACQ probe molecule is qualitatively classified using the concept of solubility classification.

The solubility classification of the ACQ probe molecule of the present invention in the auxiliary agent is above "soluble," preferably above "more soluble," more preferably "easily soluble," according to the reference standard for solubility classification described in Table 1 below. That is to say, the solubility of the ACQ probe molecule in the auxiliary agent is ≥ 0.1 mg/ml (≥ 0.01%), preferably ≥ 1 mg/ml (≥ 0.1%), and more preferably ≥ 10 mg/ml (≥ 1%).

Taking the CUR (curcumin) molecule as an example, if it has a solubility of ≥ 0.1 mg/ml (i.e., ≥ 0.01%) in a particular solvent at room temperature, it can be determined that its solubility classification is above "soluble" in that particular solvent, and the CUR molecule can be used as a probe to constitute the ACQ fluorescence probe composition of the present invention with that particular solvent. In fact, in the present invention, when CUR is prepared into a probe

solution at a concentration of 1.0 mg/ml, it can exhibit appropriate fluorescence properties and perform a cmc determination.

Table 1

| Solubility classification | Easily soluble | More soluble | Soluble | Sparingly soluble/Insoluble |
|---|---|---|---|---|
| Reference standard | > 10 mg/ml (> 1%) | 1-10 mg/ml (0.1-1%) | 0.1-1.0 mg/ml (0.01-0.1%) | < 0.1 mg/ml (< 0.01%) |

In the fluorescence probe composition of the present invention, since the ACQ probe molecule is dissolved in the auxiliary agent containing a non-volatile organic solvent having a boiling point above 100°C, a stable and homogeneous probe solution can be formed, which is easily stored and preserved for a long time without volume reduction or concentration change even after long-term storage. Furthermore, the fluorescence probe composition can be transferred and taken out before use, and can be directly used to determine the cmc concentration of a surfactant without the need for solvent volatilization, thus reducing the operation time. In addition, if the ACQ molecule is directly added without being dissolved in the organic solvent, the addition amount of the probe will be inaccurate, and the mixing will be uneven, which will affect the accuracy of the cmc determination results. Because the fluorescence probe composition of the present invention is in a solution form, a sampling means (e.g., a peristaltic pump and compatible tubing) can be used to accurately weigh, transfer, and load, which is convenient for operation.

Practical uses of the ACQ fluorescence probe composition of the present invention can include the use of the ACQ fluorescence probe composition as a probe solution for the cmc determination of a surfactant solution or for the determination of whether stains can be cleaned or not for laundry with different stains, thereby providing a suitable basis for a dispensing control method for detergent in the washing equipment.

Hereinafter, various components included in the ACQ fluorescence probe composition of the present invention will be described in detail.

[ACQ molecule]

The probe molecule of the present invention is a fluorescent molecule with ACQ property.

Aggregation-caused quenching (ACQ) is a phenomenon possessed by ACQ fluorescent molecules, where the fluorescent molecules emit light in a dilute solution state, and once aggregated or changed into a solid state, their fluorescence intensity significantly weakens or even disappears. Common ACQ molecules include curcumin, fluorescein, rhodamine, Nile red, pyrene, perylene, etc. These molecules usually have planar conjugated systems with strong rigidity. In a good solvent and low-concentration solution, the fluorescent molecules exist as independent molecules and can emit strong fluorescence when excited by specific light. When aggregated in a poor solvent or when the concentration increases to some extent, intermolecular $\pi$-$\pi$ forces increase, and most of the excitation energy is released in the form of non-radiative transitions (e.g., molecular thermal motion, etc.), resulting in weakened or disappeared fluorescence.

The different aggregation states or dispersion states of ACQ molecules in a solution and in a micelle exhibit completely different fluorescence characteristics, including fluorescence emission intensity (no/weak/strong) and characteristic wavelength (spectral blue shift/unchanged/red shift), etc. Based on these characteristics, the ACQ molecules can be used as probes to determine the cmc of a surfactant solution.

In the present invention, hydrophobic ACQ molecules can be used for the cmc determination by dissolving these ACQ molecules as probes in a suitable organic solvent to form a probe solution, i.e., an ACQ fluorescence probe composition. When such a probe solution is added to water or an aqueous solution of a low concentration of a surfactant, the ACQ molecules exist in an aggregated state due to their hydrophobicity, and there is no fluorescence or low fluorescence at this time. However, when the surfactant has the cmc concentration and forms micelles, the hydrophobic inner core of the micelles can serve as a good solvent for the ACQ fluorescent molecules and promote their dissolution. When the ACQ molecules are dissolved in the micelles as single molecules, strong characteristic fluorescence is emitted, and thus, obvious ACQ characteristics are exhibited in a suitable concentration range.

Moreover, some hydrophilic or partially hydrophilic ACQ molecules can also be used for the cmc determination. For example, as a hydrophilic ACQ molecule, rhodamine B can be dissolved completely in water to form a homogeneous and stable solution. In the aqueous solution, a low concentration of rhodamine B is in dispersed state and can emit strong fluorescence. In contrast, at a high concentration, aggregation occurs and the fluorescence disappears. This consistent with the ACQ characteristics of fluorescence emission when dissolved and dispersed in a dilute concentration and good solvent and quenching in an aggregated state. The inventors speculate that the mechanism is that the hydrophilic-hydrophobic amphiphilic structure of rhodamine B enables it to be inserted into the micelle palisade layer of the surfactant

and participate in micelle formation, where the hydrophilic end is located in the hydrophilic surface layer of the micelle, and the hydrophobic end is located in the palisade layer. Due to the increase in local concentration, the fluorescence intensity is enhanced, or the fluorescence wavelength shifts, thereby exhibiting different fluorescence characteristics in different systems with/without micelles. However, the accuracy of the determination results of rhodamine B as a probe may be greatly affected by the pH value of the solution with reference to its structural characteristics and pH test results.

As described above, the luminescence mechanism of the ACQ probe molecule that can be used in the present invention can be based not only on the change in fluorescence intensity due to the solubilization of the hydrophobic inner core but also on the red/blue-shift of the characteristic emission wavelength due to the amphiphilic structure of the molecule entering the inside of the palisade layer or micelles. That is to say, the luminescence strategy of the ACQ probe molecule of the present invention is based on, but not limited to, a change in fluorescence intensity or a change in characteristic wavelength, where the change in fluorescence intensity can be a change from none to present or from weak to strong, and the change in characteristic wavelength includes a change in wavelength red-shift or wavelength blue-shift.

That is to say, the ACQ probe molecule of the present invention includes an ACQ molecule with a blue-shifted characteristic wavelength, an ACQ molecule with a red-shifted characteristic wavelength, and an ACQ molecule with an unchanged characteristic wavelength. Specific examples can include pyrene, Nile red, curcumin, coumarin, sodium 8-anilino-1-naphthalenesulfonate, N-phenyl-1-naphthylamine, rhodamine B, dansyl chloride, 6-propionyl-2-(dimethylamino)naphthalene, neutral red, fluorescein, anthracene, lycopene, etc., preferably Nile red, curcumin, coumarin, N-phenyl-1-naphthylamine, rhodamine B, pyrene, etc. More preferred ACQ molecules have unchanged characteristic wavelength or blue-shift characteristics, e.g., curcumin, Nile red, coumarin, etc.

The inventors have first preliminarily screened several often used fluorescence probe molecules for their ready availability and low toxicity, including the following substances: PYR (pyrene) that is a molecule with fluorescent properties and often used for the study of biomarkers and fluorescence probes; NR (Nile red) that is a common lipophilic fluorescent dye and often used to stain and label lipid substances such as lipids; CUR (curcumin) that is a versatile natural fluorescence probe and drug molecule; C480 (coumarin) that is a common (heavy) metal detection fluorescence probe; ANS (sodium 8-anilino-1-naphthalenesulfonate) that is a fluorescence probe and widely used for the study of structural and conformational changes of proteins; NPN (N-phenyl-1-naphthylamine) that is an often used fluorescent dye and has a wide range of application fields, including biomedicine, material science, and chemical analysis, etc.; RhB (rhodamine B) that is a cell fluorescence dye often used in laboratories.

The chemical structures of these fluorescent molecules are shown below:

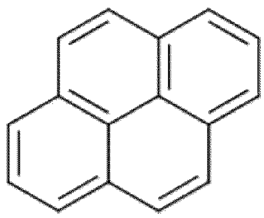

PYR

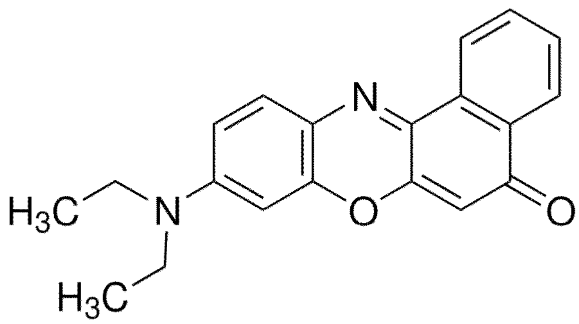

NR

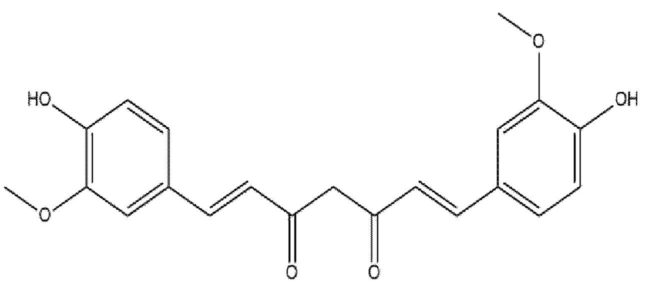

CUR

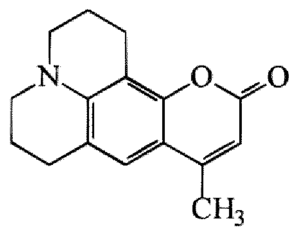

C480

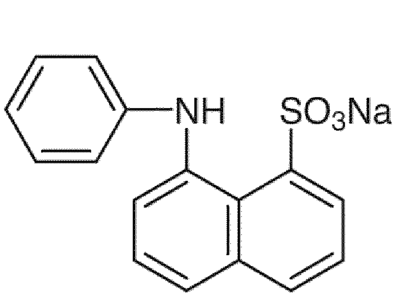

ANS

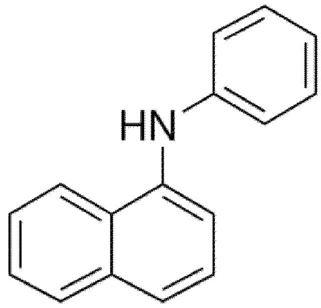

NPN

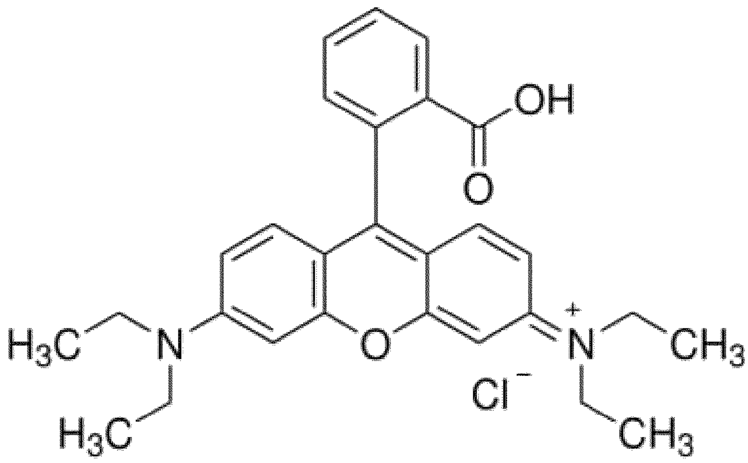

RhB

In order to determine whether these fluorescence probe molecules can form a stable probe solution, the inventors dissolved these probe molecules in N-methylpyrrolidone (NMP). As a result, all can form a clear solution and fluoresce in various colors in the solution state.

Detergent solutions prepared in a series of concentrations, including the directly prepared Supreme Clean (i.e. Supreme Biotechnology (Clean) liquid laundry detergent) solution and Supreme Brilliant White (i.e. Supreme Biotechnology (Brilliant White) liquid laundry detergent) washing water containing a fluorescent brightener, are tested using these probe solutions formed above. Specifically, an appropriate wavelength is selected according to the determination results of a fluorescence spectrophotometer, and a fluorescence response value-concentration curve is plotted with detergent concentrations on the x-axis and fluorescence intensity on the y-axis. The change section of the curve from a plateau region to a rising region is visually obtained, corresponding to the value range of the measured value of cmc. The results are shown in Table 2 below.

The meanings of abbreviations in Table 2 are as follows: PYR is pyrene; ANS is sodium 8-anilino-1-naphthalenesulfonate; NPN is N-phenyl-1-naphthylamine; C480 is coumarin 480 (density of 1.3 g/$cm^3$); CUR is curcumin; NR is Nile red. "/" represents not determined. In addition, the meaning of the comprehensive evaluation column in the table is as follows: ×, not determinable; Δ, usable, but with large error or weak anti-interference; ◦, preferred; ◎, more preferred.

In addition, the spectral parameters and the values of the solubility parameter δ, the change in the characteristic wavelength, and comparison results of cmc determined by the surface tension method for various probes are also shown in Table 2.

Table 2

| Probe | Spectral parameters Ex/Em | Supreme Clean solution (directly prepared) | | Supreme Brilliant White washing water | | Effect of fluorescen -t brightener | Comprehe -nsive evaluation | Solubility parameter δ* | Change in characte -ristic wavelen -gth |
|---|---|---|---|---|---|---|---|---|---|
| | | cmc value range g/L | Surface tension method g/L | cmc value range g/L | Surface tension method g/L | | | | |
| PYR | 335/373 nm, 384 nm | 0.05-0.2 | | 0.03-0.1 | | high | Δ | 22.909 | Red shift |
| ANS | 360/435 nm | Not determinable | | / | | - | × | 25.566 | Blue shift |
| NPN | 335/415 nm | 0.02-0.05 | | Not determinable | | high | Δ | 21.854 | Blue shift |
| C480 | 390/476 nm | 0.05-0.2 | 0.066 | 0.3-1 | 0.3 | low | ○ | 22.363 | Blue shift |
| NR | 550/638 nm | 0.05-0.1 | | 0.2-0.3 | | None | ◎ | 20.385 | Blue shift |
| CUR | 430/495 nm | 0.05-0.1 | | 0.2-0.3 | | None | ◎ | 22.579 | Unchang ed |
| RhB | 540/585 nm | 0.1-0.15 | | 0.3-1 | | None | ○ | 30.453 | Red shift |

* The solubility parameters δ of PYR, CUR, and RhB are document-reported values, and the solubility parameters δ of the remaining probe molecules are HSP values calculated based on the functional group contribution method. The sulfonic acid functional group in ANS has no reference data, and therefore, it is calculated as the phosphoric acid functional group.

As shown in Table 2, the characteristic wavelength of the fluorescence probe molecule may change before and after the cmc of the surfactant, with $\Delta\lambda = \lambda$ (surfactant concentration $\geq$ cmc) - $\lambda$ (surfactant concentration < cmc). When $\Delta\lambda >$ 0, the red shift occurs (i.e., the wavelength becomes larger); when $\Delta\lambda < 0$, the blue shift occurs (i.e., the wavelength becomes smaller), and when $\Delta\lambda = 0$, the wavelength is unchanged.

The results of Table 2 show that in the probe composition system with NMP as the auxiliary agent, the fluorescence response value of the water-soluble ANS probe has a linear relationship with the detergent concentration, with no obvious inflection point, making it difficult to use for the determination of the cmc. PYR and NPN can be used as probes to determine the cmc in the directly prepared Supreme Clean solution, and the deviation of the determination results is small. However, the results determined by PYR in the actually used Supreme Brilliant White washing water are affected by various factors, resulting in a large deviation, and NPN is greatly affected by the fluorescent brightener in the determination of Supreme Brilliant White washing water, resulting in that the cmc cannot be determined. The comprehensive evaluation results show that the four fluorescent molecules C480, CUR, NR, and rhB are suitable for determining the cmc concentration of a surfactant solution or actually used washing water in a system with NMP as the auxiliary agent, and are the preferred ACQ molecules.

It can also be seen from Table 2 that the deviation of the results determined by RhB and C480 is slightly greater. The more preferred ACQ molecules in the present invention are curcumin CUR and Nile red NR. The cmc value ranges determined by the two molecules for the directly prepared Supreme Clean solution (excluding the fluorescent brightener) can be verified with each other and are consistent with the results determined by the surface tension method (0.066 g/L) with high accuracy. Furthermore, in the actually used Supreme Brilliant White washing water containing a fluorescent brightener, the cmc value ranges determined by the two molecules are also consistent with the results determined by the surface tension method (0.3 g/L), and neither was interfered with by the fluorescent brightener contained therein (CBS or FB-33). The inventors speculate that this is because the fluorescent brightener 33# (FB-33) has an Ex/Em = 370/430 nm, and disodium distyrylbiphenyl disulfonate (CBS) has an Ex/Em = 340/425 nm. The emission peak of NR is at 638 nm, which is not within the range of the emission peak of the fluorescent brightener, so NR is not affected by it. Although the emission wavelength of CUR falls within the range of the fluorescence emission peak of the fluorescent brightener, the response of the fluorescent brightener is not obvious at the excitation wavelength of 430 nm, i.e., the fluorescent brightener has no fluorescence emission at this excitation wavelength, so the interference of the fluorescent brightener can also be avoided.

In the present invention, Hansen solubility parameter (HSP) $\delta$ is used to measure the molecular polarity and intermolecular forces of the ACQ probe molecules. Referring to the data in Table 2, it can be seen that the solubility parameter $\delta$ of ACQ probe molecules approximately in the range of 15 to 35 can form a stable probe solution. Therefore, it is preferred that the ACQ probe molecule has a Hansen solubility parameter $\delta$ of 15 to 35. In addition, from the perspective of the accuracy of the cmc determination, the solubility parameter of the ACQ probe molecule is more preferably in the range of 20 to 25.

The screening results described above are merely illustrative examples of the ACQ fluorescence probe composition of the present invention. Different ACQ fluorescence probe compositions may exhibit different fluorescent properties and ACQ characteristics when different organic solvents are used as the auxiliary agent. Therefore, the ACQ fluorescent molecule used in the present invention is not limited to the above RhB, C480, CUR, and NR, and the auxiliary agent is also not limited to NMP. A specific combination of a suitable ACQ fluorescent molecule and an auxiliary agent can be selected according to specific application scenarios and requirements.

[Auxiliary agent]

The auxiliary agent in the ACQ fluorescence probe composition of the present invention includes one or more non-volatile organic solvents, the type of which depends primarily on its own volatility, as well as the solubility and fluorescent properties of the ACQ molecule in the organic solvent, and the like.

In the present invention, the property (viscosity, density, flash point, etc.) of the auxiliary agent means the property of the organic solvent when the auxiliary agent includes only one organic solvent, and the property of the auxiliary agent means the property of the mixed solvent when the auxiliary agent is a mixed solvent of various organic solvents or a mixed solvent of an organic solvent and an inorganic solvent.

In the prior art, in order to determine the cmc using an ACQ molecule as a probe, the ACQ molecule is usually pre-dissolved in a volatile organic solvent such as methanol, ethanol, benzene, tetrahydrofuran, and dioxane, and the organic solvent is then removed for determination. However, these organic solvents themselves are high-volatile and colorless liquids with low boiling points and flash points. When these organic solvents are used for preparing the probe solution of the present invention, the prepared stock solution is not easily stored for a long time, and the volume of the solution and the concentration of the probe are easy to change.

Using curcumin CUR as a specific probe molecule, the inventors have studied and screened the physical properties of a series of organic solvents and found that some specific organic solvents can be used as auxiliary agents for the above ACQ molecules. These organic solvents have sufficient dissolving capacity for ACQ molecules, are not easy to

volatilize, and can enable curcumin CUR to exhibit significant ACQ characteristics within a suitable concentration range of a specific surfactant solution.

The volatility, water solubility, density, viscosity, and probe solubility of a series of organic solvents investigated by the inventors are shown in Table 3.

Table 3. Properties of various solvents

| Solvent name | Volatility/Boiling point (°C) | Flash point °C | Density $g/cm^3$ | Viscosity mPa·s | Probe solubility in solvent *1 | Solvent solubility in water *2 |
|---|---|---|---|---|---|---|
| Water | 100 | / | 1 | 1.002 | Insoluble | / |
| Acetonitrile | 82 | 5.6 | 0.782 | 0.375 | Easily soluble | Easily soluble |
| Acetone | 56 | -17.8 | 0.791 | 0.316 | Easily soluble | Easily soluble |
| n-Hexane | 69 | < -23 | 0.659 | 0.307 | Insoluble | Insoluble |
| Toluene | 111 | 4.4 | 0.866 | 0.587 | Sparingly soluble | Insoluble |
| n-Octanol | 195 | 81 | 0.826 | 8.93 | Soluble | Insoluble |
| Dibutyl phthalate | 339 | 171 | 1.043 | 9.72 | More soluble | Insoluble |
| n-Butanol | 117-118 | 37 | 0.811 | 2.95 | More soluble | Slightly soluble |
| Ethylene glycol | 197 | 110 | 1.113 | 25.66 | Soluble | Easily soluble |
| Ethylene glycol monophenyl ether | 245 | 121 | 1.102 | 30.5 | Easily soluble | Slightly soluble |
| N-methylpyrrolidone (NMP) | 204 | 85 | 1.028 | 1.65 | Easily soluble | Easily soluble |
| N-ethylpyrrolidone (NEP) | 218 | 76.1 | 0.992 | / | Easily soluble | Easily soluble |
| Dimethylformamide (DMF) | 153 | 58 | 0.944 | 0.802 | Easily soluble | Easily soluble |
| Diethylene glycol monoethyl ether (DGME) | 202 | 94 | 0.999 | 3.85 | More soluble | Easily soluble |
| Ethyl glycolate | 158 | 62 | 1.1 | / | More soluble | Easily soluble |
| Polyethylene glycol 200 (PEG200) | > 250 | > 100 | 1.125 | / (22-23) | More soluble | Easily soluble |
| 1,3-butanediol | 207 | 121 | 1.005 | 130.3 | Soluble | Easily soluble |
| 1,5-Pentanediol | 242 | 129 | 0.994 | 128 | Soluble | Easily soluble |

*1 The ACQ probe molecule is CUR, and its solubility refers to the solubility classification described above, where > 1% is easily soluble, 0.1-1% is more soluble, 0.01-0.1% is soluble, and < 0.01% is sparingly soluble/insoluble.
*2 Solubility of the solvent in water is classified with reference to the solvent data in Pub Chem, where > 10% is easily soluble, 1-10% is soluble, 0.01-1% is slightly soluble, and < 0.01% is sparingly soluble/insoluble.

In order to form a stable probe solution that facilitates storage for a long time, the auxiliary agent in the ACQ fluorescence probe composition of the present invention must include one or more non-volatile organic solvents.

In the present invention, a boiling point value is used to evaluate the volatility of an organic solvent. In general, the

lower the boiling point of the organic solvent, the greater the volatility. As can be seen from Table 3, the volatile organic solvents (such as acetone) often used in the art have low boiling points and excessive volatility, making them unsuitable as the auxiliary agent for the stable probe solution of the present invention.

As a suitable auxiliary agent, the non-volatile organic solvent of the present invention is defined to have a boiling point above 100°C, preferably a boiling point above 120°C, and more preferably a boiling point above 150°C.

Moreover, in order to form a homogeneous clear solution with a sufficient probe concentration, the ACQ probe molecule of the present invention must have good solubility in the organic solvent as the auxiliary agent. It is preferred that the solubility classification of the probe is at least soluble, i.e., the solubility of the probe molecule in the organic solvent is preferably above 0.1 mg/ml (0.01%).

It is difficult to perform solubility testing experiments on each solvent when selecting suitable organic solvents for a selected probe molecule. If the solubility of the probe relative to the solvent can be evaluated and predicted in advance, the time and cost required for selecting the auxiliary agent can be greatly reduced.

In the present invention, in order to establish an intrinsic link between the microstructure and the macroscopic solubility of the probe molecule, Hansen solubility parameter theory (HSP theory) was used to evaluate and predict the solubility of the ACQ molecule in the organic solvent.

There are various methods to calculate solubility parameters. In HSP theory, the surface energies of solutes and solvents are classified based on three energy terms. The three energy terms are dispersion δd, polarity δp, and hydrogen bonding δh, in units of $MPa^{1/2}$. Based on the HSP theory, if the HSP values of the solutes are (δd1, δρ1, δh1), and the HSP values of the solvents are (δd2, δρ2, δh2), the distance Ra of the Hansen solubility parameters between these solutes and solvents (abbreviated as HSP distance Ra) can be expressed by Equation 1 below.

$$Ra^2 = 4(\delta d1-\delta d2)^2 + (\delta p1-\delta p2)^2 + (\delta h1-\delta h2)^2 \text{ (Equation 1)}$$

The smaller the HSP distance Ra, the easier the solute will dissolve in the solvent. In the probe-organic solvent system, the organic solvent is a dispersion medium, and the probe molecule as a solute is a dispersoid. In general, a dispersed state can be obtained at Ra ≤ 20, a medium dispersed state can be obtained at Ra ≤ 15, a high dispersed state can be obtained at Ra ≤ 10, and an ultra-high dispersed state can be obtained at Ra ≤ 5. By comparing Ra values between a solute and different solvents, a solvent with similar interaction forces with the solute can be found to achieve higher solubility.

The inventors investigated the document values or calculated values of solubility parameters of various organic solvents, or mixed solvents of organic solvents and inorganic solvents, as well as the measured results of solubility classification, using a probe molecule, i.e., curcumin (CUR), as an example of a solute. The results are shown in Table 4-1 below.

Table 4-1. Solubility parameters of curcumin (CUR) and various solvents

| Name | Dispersion δD | Polarity δH | Hydrogen bonding δH | Total δ | δ difference | Ra | Measured solubility of the probe in solvent |
|---|---|---|---|---|---|---|---|
| n-Hexane | 14.9 | 0 | 0 | 14.900 | -7.679 | 15.204 | Insoluble |
| Toluene | 18 | 1.4 | 2 | 18.165 | -4.414 | 12.102 | Sparingly soluble |
| Acetone | 15.5 | 10.4 | 7 | 19.935 | -2.644 | 10.372 | Easily soluble |
| Dibutyl phthalate | 17.8 | 8.6 | 4.1 | 20.189 | -2.390 | 10.942 | More soluble |
| n-Octanol | 16 | 5 | 11.9 | 20.557 | -2.022 | 3.753 | Soluble |
| Polyethylene glycol 200 * | 11.735 | 6.353 | 17.710 | 22.174 | -0.405 | 12.383 | More soluble |
| Diethylene glycol monoethyl ether (DGME) | 16.1 | 9.2 | 12.2 | 22.197 | -0.382 | 6.386 | More soluble |
| Ethylene glycol monophenyl ether | 17.8 | 5.9 | 12.2 | 22.372 | -0.207 | 2.858 | Easily soluble |

(continued)

| Name | Dispersion δD | Polarity δH | Hydrogen bonding δH | Total δ | δ difference | Ra | Measured solubility of the probe in solvent |
|---|---|---|---|---|---|---|---|
| CUR (probe) | 17.46 | 3.66 | 13.84 | 22.579 | / | / | / |
| N-ethylpyrrolidone (NEP) | 18 | 12 | 7 | 22.738 | 0.159 | 10.840 | Easily soluble |
| N-methylpyrrolidone (NMP) | 18 | 12.3 | 7.2 | 22.959 | 0.380 | 10.950 | Easily soluble |
| n-Butanol | 16 | 5.7 | 15.8 | 23.198 | 0.619 | 4.066 | More soluble |
| DGME:$H_2O$ = 9:1 * | 16.04 | 9.88 | 15.21 | 24.212 | 1.633 | 6.974 | More soluble |
| Acetonitrile | 15.3 | 18 | 6.1 | 24.399 | 1.820 | 16.858 | Easily soluble |
| Ethyl glycolate * | 16.590 | 7.397 | 16.891 | 24.804 | 2.225 | 14.383 | More soluble |
| Dimethylformamide | 17.4 | 13.7 | 11.3 | 24.862 | 2.283 | 10.357 | Easily soluble |
| Dimethyl sulfoxide | 18.4 | 16.4 | 10.2 | 26.675 | 4.096 | 13.383 | More soluble |
| 1,5-Pentanediol * | 16.893 | 6.749 | 19.539 | 26.696 | 4.118 | 6.580 | Soluble |
| DGME:$H_2O$ = 7:3 * | 15.92 | 11.24 | 21.23 | 28.818 | 6.239 | 11.025 | More soluble |
| 1,3-Butanediol (1,3-BDO) | 16.6 | 10 | 21.5 | 28.945 | 6.366 | 10.091 | Soluble |
| 1,3-BDO:$H_2O$ = 8:2 * | 16.38 | 11.2 | 25.66 | 32.437 | 9.858 | 14.186 | Soluble |
| Ethanol: water = 7:3 * | 15.71 | 10.96 | 26.27 | 32.512 | 9.933 | 14.834 | Soluble |
| Ethylene glycol | 17 | 11 | 26 | 32.955 | 10.376 | 14.233 | Soluble |
| NMP:$H_2O$ = 5:5 * | 16.75 | 14.15 | 24.75 | 33.066 | 10.487 | 15.201 | More soluble |
| DGME:$H_2O$ = 5:5 * | 15.8 | 12.6 | 27.25 | 33.926 | 11.347 | 16.455 | More soluble |
| Glycerol | 17.4 | 12.1 | 29.3 | 36.162 | 13.583 | 17.614 | Sparingly soluble |
| Triethanolamine | 17.3 | 22.4 | 23.3 | 36.660 | 14.081 | 20.995 | Sparingly soluble |
| DGME:$H_2O$ = 3:7 * | 15.68 | 13.96 | 33.27 | 39.340 | 16.761 | 22.278 | Sparingly soluble |
| DGME:$H_2O$ = 1:9 * | 15.56 | 15.32 | 39.29 | 44.950 | 22.371 | 28.251 | Insoluble |
| Water ($H_2O$) | 15.5 | 16 | 42.3 | 47.807 | 25.228 | 31.267 | Insoluble |
| * indicates that the δ values listed are calculated, where the δ value of a single solvent is calculated based on the functional group contribution method, and the δ value of a mixed solvent is calculated based on the δ value of a single solvent and the solvent ratio contribution method. | | | | | | | |

As can be seen from Table 4-1, except for a few non-polar organic solvents (e.g., cyclohexane, toluene), the HSP

distance Ra value has an approximate corresponding relationship with the measured solubility classification, where most organic solvents or mixed solvents with a HSP distance Ra value below 17 have good solubility for the ACQ probe molecule (CUR), and their solubility classification is above "soluble." When the Ra value is below 15, preferably below 12, the predicted solubility of the ACQ probe molecule in the solvent based on the HSP distance Ra value has better consistency with the measured solubility classification results.

Therefore, in the present invention, the HSP distance Ra value between the ACQ probe molecule and the organic solvent or the mixed solvent as an auxiliary agent is set to below 17, preferably below 15, and more preferably below 12, to obtain good probe solubility.

However, there are sometimes some errors in predicting the solubility based on the HSP distance Ra value. For example, the HSP distance Ra value (16.858) between acetonitrile and the probe molecule is much larger than the HSP distance Ra value (3.753) between n-octanol and the probe molecule, but the measured results show that acetonitrile has significantly better solubility for the probe molecule than n-octanol. The reason is unclear and may be due to the influence of intermolecular forces (e.g., hydrogen bonding), polarity, or molecular conformation on solubility, etc. To this end, the difference of Hansen solubility parameters δ (Δδ) is further introduced to correct the predicted results.

According to the solubility parameter theory proposed by Hildebrand, the total δ value of the solubility parameter (simply referred to as δ) is the vector sum of dispersion δd, polarity δp, and hydrogen bonding δh components (see Equation 2 below). When the difference between the total δ of a solute and a solution, i.e., the δ difference (Δδ), is less than a fixed value, the solution is relatively stable, namely so-called compatibility theory.

$$\delta^2 = \delta d^2 + \delta p^2 + \delta h^2 \qquad \text{(Equation 2)}$$

As can be seen from Table 4-1, the total δ value of the CUR molecule as an ACQ probe molecule is 22.579, and the total δ value of most organic solvents or mixed solvents with good solubility for the CUR molecule (solubility classification is above "soluble") is in the range of 19 to 34.

Therefore, in the present invention, the δ difference between the total δ of the organic solvent or the mixed solvent as an auxiliary agent and the total δ of the ACQ probe molecule (i.e., Δδ = total δ of auxiliary agent - total δ of ACQ probe molecule) is preferably in the range of -3 to +12, more preferably in the range of -2.5 to +10, further preferably in the range of -2 to +4, and still further preferably in the range of -2.0 to +2.5, from the perspective of compatibility between the solute and the solvent. Further, from the perspective that the formed probe solution is more stable, it is preferred that the absolute value of the δ difference is below 2, more preferably below 1.

As can be seen from Table 4-1, based on the requirement that the organic solvent is non-volatile, acetone, acetonitrile, and ethanol need to be excluded first (see Table 3). Secondly, organic solvents or mixed solvents that simultaneously meet the requirements for the organic solvent of HSP distance Ra below 17 and δ difference of -3 to +12 include dibutyl phthalate, n-octanol, polyethylene glycol 200 (PEG200), diethylene glycol monoethyl ether (DGME), ethylene glycol monophenyl ether, N-ethylpyrrolidone (NEP), N-methylpyrrolidone (NMP), n-butanol, ethyl glycolate, dimethylformamide (DMF), dimethyl sulfoxide, 1,5-pentanediol, 1,3-butanediol (1,3-BDO), ethylene glycol, and mixed solvents of these organic solvents (e.g., DGME, 1,3-BDO, NMP) with water in a specific ratio, etc. These solvents have good solubility and compatibility with the ACQ probe molecule of the present invention and can be used as the auxiliary agent of the present invention.

Further, as a preferred auxiliary agent of the present invention, solvents that simultaneously meet the requirements for the organic solvent of HSP distance Ra below 15, δ difference of -2.5 to +10, and non-volatile properties include dibutyl phthalate, n-octanol, polyethylene glycol 200 (PEG200), diethylene glycol monoethyl ether (DGME), ethylene glycol monophenyl ether, N-ethylpyrrolidone (NEP), N-methylpyrrolidone (NMP), n-butanol, ethyl glycolate, dimethylformamide (DMF), dimethyl sulfoxide, 1,5-pentanediol, 1,3-butanediol (1,3-BDO), and mixed solvents of these organic solvents with water in a specific ratio, such as a mixed solvent of DGME and water (9:1), a mixed solvent of DGME and water (7:3), and a mixed solvent of 1,3-BDO and water (8:2). As a more preferred auxiliary agent of the present invention, solvents that simultaneously meet the requirements for the organic solvent of HSP distance Ra below 12 and δ difference of -2.0 to +2.5 include: diethylene glycol monoethyl ether (DGME), ethylene glycol monophenyl ether, N-ethylpyrrolidone (NEP), N-methylpyrrolidone (NMP), n-butanol, a mixed solvent of DGME with water (9:1), and dimethylformamide (DMF).

The range of types of organic solvents selected by the above method is basically consistent with the range of types of organic solvents subsequently selected by the inventors through extensive experiments. Therefore, according to the present invention, suitable combinations of ACQ probe molecules and auxiliary agents can be predicted and selected base on the boiling point of organic solvents and the solubility parameter δ of probe molecules and organic solvents.

That is to say, in determining the combination of the probe and the auxiliary agent in the ACQ fluorescence probe composition of the present invention, a large number of organic solvents can be first selected as an alternative options of auxiliary agent considering the volatility of the auxiliary agent itself with reference to the boiling point value of the solvent, and then the solubility and compatibility of the probe molecule in various auxiliary agents can be better predicted by consulting or calculating in advance the solubility parameter values of the selected probe molecule and the alternative

organic solvents, thereby greatly improving the selecting efficiency of the auxiliary agent and saving costs, which has important guiding significance in the preparation of the ACQ fluorescence probe composition of the present invention.

In general, the components of the HSP values (δd, δp, and δh) of most small molecules can be found in documents, and of polymers generally need to be calculated. The δd, δp, and δh values of different substances can be found in the Hansen Solubility Parameters manual and the attached table of the Edproperties of polymer, and can also be calculated based on the functional group contribution method. However, the calculation method may result in a lower δh value due to the lack of consideration for intermolecular interactions.

In preparing the ACQ fluorescence probe composition of the present invention, as to the organic solvent in the auxiliary agent, in addition to the requirment of non-volatility and good solubility for the probe, other properties of the auxiliary agent (e.g., viscosity, water solubility, density, flash point, etc.) need to be considered.

From the perspectives of easy dispersion, convenient sampling, and accurate weighing of the prepared probe solution, the viscosity of the organic solvent as an auxiliary agent is preferably below 30 mPa·s, more preferably below 25 mPa·s, and further preferably below 10 mPa·s.

For the organic solvent with higher viscosity, the viscosity can be reduced by combining various solvents to form a mixed solvent. For example, the viscosity of 1,3-butanediol (1,3-BDO) is 130 mPa·s, which can be significantly reduced by adding a certain proportion of a low-viscosity solvent such as NMP, DGME, or water to prepare a mixed solvent.

In order to form a stable solution system to be tested, it is preferred that the organic solvent is soluble with water. In the present invention, "soluble with water" means that the organic solvent has a certain solubility in water, particularly may be slightly soluble, soluble, or easily soluble in water (see Table 3).

Moreover, in order that the probe solution can be uniformly dispersed in the surfactant solution when the cmc is determined, the density of the organic solvent in the auxiliary agent is preferably 0.9 to 1.2 g/$cm^3$, so that the probe solution is easily uniformly dispersed in water. If the density difference between the organic solvent and water is significant, it is prone to nonuniform dispersion. Since the probe solution is generally added from above of the liquid to be tested, the density of the organic solvent could be slightly greater than that of water, preferably controlled below 1.2 g/$cm^3$. If the density is less than 0.9 g/$cm^3$, it is easily suspended above the aqueous solution, which is not conducive to the dispersion of the probe molecule in the aqueous solution.

A combination of solvents can be used to adjust the density of the mixed solvent. For example, n-butanol with a density of only 0.811 g/$cm^3$ can be mixed with a solvent with a higher density, such as ethylene glycol or NMP, so as to obtain a mixed solvent with an appropriate density.

In addition, considering safety, the auxiliary agent of the present invention is preferably an organic solvent with low toxicity, slight toxicity, or no toxicity, and a flash point above 60°C, preferably above 70°C, more preferably above 75°C.

Likewise, a combination of solvents can also be used to adjust the flash point of the mixed solvent. For example, n-butanol has good solubility (more soluble) for the probe (CUR) and a lower flash point of only 37°C, and ethylene glycol has slightly lower solubility for the probe (CUR) and a flash point of 110°C, so that by mixing a small amount of n-butanol in ethylene glycol (e.g., 99.5% ethylene glycol -0.5% n-butanol (v/v)), a good balance between solubility and flash point properties can be achieved.

Considering various property parameters of the organic solvent, it can be concluded that the auxiliary agent of the present invention is preferably one or more selected from n-butanol, ethylene glycol, NMP, NEP, DMF, DGME, ethyl glycolate, polyethylene glycol 200, 1,3-butanediol, and 1,5-pentanediol, more preferably one or more selected from n-butanol, ethylene glycol, NMP, NEP, DGME, and polyethylene glycol 200, and further preferably NMP, NEP, DGME, and polyethylene glycol 200.

Moreover, as the type of ACQ molecule varies, the preferred range of its corresponding auxiliary agent may also vary, depending primarily on how well the solubility parameters of the two match, as described above.

For example, when pyrene or rhodamine B is used as a solute, the solubility parameters described in Tables 4-2 and 4-3 below can be used to evaluate and predict their solubility in various solvents.

Table 4-2. Solubility parameters of pyrene and various solvents

| Solvent name | Dispersion δD | Polarity δH | Hydrogen bonding δH | Total δ | δ difference | Ra | Measured solubility classification of pyrene |
|---|---|---|---|---|---|---|---|
| Ether | 14.5 | 2.9 | 4.6 | 15.486 | -7.423 | 16.064 | More soluble |
| Acetone | 15.5 | 10.4 | 7 | 19.935 | -2.974 | 16.806 | Easily soluble |
| DGME | 16.1 | 9.2 | 12.2 | 22.197 | -0.712 | 16.995 | Easily soluble |
| **Pyrene** | **22.5** | **1.6** | **4** | **22.909** | / | / | / |

(continued)

| Solvent name | Dispersion δD | Polarity δH | Hydrogen bonding δH | Total δ | δ difference | Ra | Measured solubility classification of pyrene |
|---|---|---|---|---|---|---|---|
| NMP | 18 | 12.3 | 7.2 | 22.959 | 0.050 | 14.343 | Easily soluble |
| DMF | 17.4 | 13.7 | 11.3 | 24.862 | 1.953 | 17.428 | Easily soluble |
| 1,3-Butanediol | 16.6 | 10 | 21.5 | 28.945 | 6.036 | 22.717 | Sparingly soluble |
| Ethylene glycol | 17 | 11 | 26 | 32.955 | 10.046 | 26.332 | Sparingly soluble |
| Water | 15.5 | 16 | 42.3 | 47.807 | 24.898 | 43.246 | Insoluble |

Table 4-3. Solubility parameters of rhodamine B and various solvents

| Name | Dispersion δD | Polarity δH | Hydrogen bonding δH | Total δ | δ difference | Ra | Measured solubility classification of rhodamine B |
|---|---|---|---|---|---|---|---|
| Ether | 14.5 | 2.9 | 4.6 | 15.486 | -14.967 | 20.633 | Insoluble |
| Acetone | 15.5 | 10.4 | 7 | 19.935 | -10.518 | 13.727 | More soluble |
| n-Octanol | 16 | 5 | 11.9 | 20.557 | -9.896 | 14.205 | Easily soluble |
| DGME | 16.1 | 9.2 | 12.2 | 22.197 | -8.256 | 10.489 | Easily soluble |
| NMP | 18 | 12.3 | 7.2 | 22.959 | -7.494 | 12.708 | Easily soluble |
| 1,3-Butanediol | 16.6 | 10 | 21.5 | 28.945 | -1.508 | 8.080 | More soluble |
| **Rhodamine B** | **16.7** | **17.5** | **18.5** | **30.453** | / | / | / |
| Ethylene glycol | 17 | 11 | 26 | 32.955 | 2.502 | 9.943 | More soluble |
| Water | 15.5 | 16 | 42.3 | 47.807 | 17.354 | 23.968 | Soluble |

In Table 4-3, the HSP distance Ra between rhodamine B and water is 23.968, but it is "soluble" in water. The inventors speculate that this may be because rhodamine B itself is an ionic form of quaternary ammonium salt, which contains tertiary amine groups that can form hydrogen bondings after protonation in aqueous solution, i.e., rhodamine B has a strong intermolecular interaction force with water, but this strong interaction force cannot be taken into account when calculating using HSP parameters, so the calculated result is not completely consistent with the actual test result.

In determining the specific combination of the fluorescent molecule and the auxiliary agent in the ACQ fluorescence probe composition of the present invention, unlike the previously studied AIE fluorescence probe composition, which focuses on the hydrophilic-hydrophobic amphiphilic molecular structure of the auxiliary agent, in the present invention, more attention is paid to the difference in properties such as solubility, dispersibility, and molecular polarity between the auxiliary agent and the ACQ molecule. This may be because AIE molecules have mostly a non-polar macromolecular structure, and the auxiliary agent has a hydrophilic-hydrophobic amphiphilic structure and is adsorbed on the surface of the AIE molecule by the hydrophobic part to form a hydrophilic layer, which facilitates the stable dispersion of the AIE molecule in an aqueous system. Therefore, the AIE molecule exists in a dispersed state without light emission in a low concentration of surfactant solution. Upon the concentration exceeding the cmc to form micelles, the auxiliary agent follows the AIE molecule into the palisade layer of the micelles to aggregate and emit light. While in the fluorescence probe composition of the present invention, the auxiliary agent has a high solubility in water, and there is a competitive relationship between the dissolution of the auxiliary agent and the ACQ molecule in a hydrophilic-hydrophobic system. When the ACQ fluorescence probe composition is added to a surfactant solution or washing water, the dispersion speed of the auxiliary agent is significantly faster than that of the ACQ probe molecule, so that the auxiliary agent is preferentially dissolved in water, and the probe tends to aggregate in water due to its hydrophobicity. Since the auxiliary molecule can only affect the solubility and stability of the ACQ probe molecule in water to a certain extent, the ACQ probe molecule exists in an aggregated state without light emission in a low concentration of surfactant solution. Upon the surfactant concentration exceeding the cmc to form micelles, the auxiliary agent cannot follow the ACQ molecule into the micelles, and the ACQ molecule enters the micelles as a monomer to emit light.

[Other components]

In the ACQ fluorescence probe composition of the present invention, in addition to the ACQ molecule as a probe and the auxiliary agent, other components such as stabilizers and preservatives may be included without affecting the effect of the ACQ.

In the case where other components are included, the total content of the other components is preferably less than 5% by mass, more preferably less than 1% by mass, relative to the total amount of the ACQ probe composition.

[ACQ fluorescence probe composition]

The ACQ fluorescence probe composition of the present invention includes an ACQ molecule as a probe and an auxiliary agent, wherein the auxiliary agent includes one or more non-volatile organic solvents.

The fluorescence emission spectrum of the ACQ molecule is one of its intrinsic characteristics, which is related to the fluorophors possessed by the molecule. However, the properties of fluorescence emission (including excitation/emission wavelength, fluorescence intensity, etc.) will vary with the environment in which the molecule is located. Therefore, for the specific combination of ACQ molecules and auxiliary agents, it is necessary to investigate its fluorescence properties and the feasibility of the determination in an actual measurement environment.

The inventors studied the solubility and fluorescence properties of CUR and NR as specific probe compounds in various solvents according to the results screened by the above method and investigated the feasibility of using these ACQ fluorescence probe compositions comprising the probe and the auxiliary agent as probe solutions to determine the cmc of a surfactant solution. The results are shown in Table 5.

Table 5

| Solvent name | CUR probe | | | NR probe | | | Notes |
|---|---|---|---|---|---|---|---|
| | Probe solubility | UV irradiation result | Feasibility for cmc determination | Probe solubility | UV irradiatio -n result | cmc determination | |
| Water | Insoluble | No fluorescence | / | Insoluble | No fluoresce nce | / | None |
| n-Butanol | More soluble | Yellow strong fluorescence | ○ | More soluble | Red strong fluoresce nce | ○ | None |
| n-Octanol | Soluble | Yellow-green strong fluorescence | × | Soluble | Red strong fluoresce nce | × | Oil-water layering, probe + auxiliary agent in the upper layer |
| Dibutyl phthalate | More soluble | Green strong fluorescence | × | Not determined | | | Oil-water layering, probe + auxiliary agent in the lower layer |
| Ethylene glycol (EG) | Soluble | Orange weak fluorescence | ○ | Sparingly soluble * | Extremel y weak fluoresce nce | ○ | Significa ntly low fluoresce nce intensity of NR-ethyl ene glycol |
| 99.5% Ethylene glycol - 0.5% n-butanol (v/v) | Soluble | Not determined | ○ | Not determined | | | None |

(continued)

| Solvent name | CUR probe | | | NR probe | | | Notes |
|---|---|---|---|---|---|---|---|
| | Probe solubility | UV irradiation result | Feasibility for cmc determination | Probe solubility | UV irradiatio -n result | cmc determination | |
| N-methylpyrrolidone (NMP) | Easily soluble | Yellowish-brown weak fluorescence | ○ | Easily soluble | Red strong fluorescence | ○ | None |
| 99.5% NMP - 0.5% n-butanol (v/v) | Easily soluble | Not determined | ○ | Easily soluble | Not determin ed | ○ | None |
| N-ethylpyrrolidone (NEP) | Easily soluble | Yellowish-brown weak fluorescence | ○ | Easily soluble | Red strong fluorescence | ○ | None |
| Ethylene glycol monophenyl ether | Easily soluble | Yellow extremely weak fluorescence | ○ | More soluble | Red extremel y weak fluorescence | ○ | Oil-water layering, suspected affinity with PET material |
| Polyethylene glycol 200 (PEG200) | More soluble | Yellow weak fluorescence | ○ | More soluble | Red weak fluorescence | ○ | Slightly high viscosity |
| Diethylene glycol monoethyl ether (DGME) | More soluble | Yellow-green strong fluorescence | ○ | More soluble | Red strong fluorescence | ○ | None |
| Ethyl glycolate | More soluble | Yellow strong fluorescence | ○ | More soluble | Red strong fluorescence | ○ | Poor acid-base stability of esters |
| 1,3-Butanediol | Soluble | Yellow strong fluorescence | ○ | Soluble | Red strong fluorescence | ○ | High viscosity, extremely slow dispersio n speed of probe in solvent |
| 1,5-Pentanediol | Soluble | Yellow strong fluorescence | ○ | More soluble | Red strong fluorescence | ○ | Too high viscosity, extremely slow dispersio n speed of probe in solvent |
| * NR is at a "Sparingly soluble" level in EG, and a large amount of NR fails to dissolve, resulting in extremely weak fluorescence intensity after the probe is added to the liquid to be tested when NR-EG is used as the probe composition for determination. | | | | | | | |

In Table 5, the "UV irradiation result" refers to the fluorescence emission observed when the target probe molecule (e.g., 1 mg/ml of CUR or 1 mM of NR) is dissolved in the corresponding solvent and a clear stock solution or the supernatant of the stock solution is irradiated under the UV lamp without the addition of any surfactant. This result can macroscopically reflect some conditions as follows: 1) solubility of the probe, 2) homogeneity/dispersibility of the probe, 3) presence or absence of interaction between the probe and the solvent, and 4) change in the fluorescence emission peak wavelength of the probe.

In general, strong fluorescence can be emitted only when the probe molecule has a certain solubility in the auxiliary agent, good homogeneity/dispersibility, and no or only weak interaction with the solvent. The color change of fluorescence can reflect the wavelength shift of the maximum emission intensity of the corresponding probe.

Thus, the "UV irradiation result" in Table 5 helps macroscopically illustrate the dispersibility of the probe in the solvent. For example, the probe molecules CUR and NR are strongly fluorescent in good solvents and not fluorescent/-weakly fluorescent in poor solvents. Moreover, it also reflects the interaction between the solvent and the probe. For example, the benzene ring structure of ethylene glycol monophenyl ether may lead to a similar aggregation quenching of probe molecules CUR and NR, resulting in a greatly weakened fluorescence intensity.

In addition, the results shown in the column "cmc determination" in Table 5 refer to the feasibility of using the composition (probe solution) comprising the probe molecule and the solvent to determine the cmc. Specifically, the fluorescence is determined on the homogenously dispersed mixed solution of the probe-solvent-surfactant aqueous solution by adding the corresponding probe-solvent composition to various concentrations of surfactant solutions to determine whether there is a difference in fluorescence, so as to determine whether the cmc determination can be achieved.

It can be seen from the results in Table 5 that when n-butanol, n-octanol, dibutyl phthalate, NMP, polyethylene glycol 200, DGME, ethyl glycolate, 1,3-butanediol, 1,5-pentanediol and the like are used as solvents, both CUR and NR can emit strong or weak fluorescence in the solvents, indicating that the probe molecules have certain solubility and dispersibility in the above solvents. However, when ethylene glycol is used as the solvent, CUR is partially soluble but has weak fluorescence intensity, and NR has poor solubility or dispersibility, exhibiting poor solubility and almost no visible fluorescence to the naked eye.

Moreover, although ethylene glycol monophenyl ether meets the requirements of low volatility of the organic solvent and good solubility of the probe, the probe molecule only emits extremely weak fluorescence after being dissolved in ethylene glycol monophenyl ether, which may be because the benzene ring structure existing in the solvent molecule itself generates an interaction force with the probe molecule, resulting in the weakening of the ability of the probe molecule to convert excitation light to fluorescence, so only extremely weak fluorescence is generated in the solvent.

Further, the cmc determination is performed on the same detergent (Supreme Biotechnology laundry detergent) using various single solvents or mixed solvents shown in Table 5. The results show that the probe compositions, prepared with n-octanol, dibutyl phthalate, and ethylene glycol monophenyl ether, exhibit the oil-water layering between the washing water solution and the probe solution during the test process, and the probe tends to dissolve in the organic solvent layer instead of the aqueous phase. In the case of using ethylene glycol monophenyl ether as an auxiliary agent, since ethylene glycol monophenyl ether is partially soluble in water, the cmc determination of a detergent can be achieved despite layering. n-Octanol and dibutyl phthalate are immiscible with water (see Table 3), and therefore, the prepared probe solution exhibits obvious oil-water layering after being added to a surfactant solution. Due to a relatively low density of n-octanol, the probe composition is located in the upper layer, and due to a relatively high density of dibutyl phthalate, the probe composition is located in the lower layer. The oil-water layering makes it impossible to obtain a homogeneously dispersed solution, and there is no significant fluorescence difference between the aqueous phases or organic phases of surfactant solutions with different concentrations, so the cmc determination cannot be performed. This indicates that the water solubility of the auxiliary agent will also significantly affect the determination results of the probe composition.

Moreover, it can be seen from the measured results in Table 5 that when CUR and NR are used as probes, and n-butanol, ethylene glycol, NMP, polyethylene glycol 200, DGME, ethyl glycolate, 1,3-butanediol, and 1,5-pentanediol are used as auxiliary agents, the addition of the probe solution to an aqueous solution of a surfactant results in detectable fluorescence signal changes, i.e., the above organic solvent can be used alone as an auxiliary agent to monitor the cmc more accurately. In addition to the non-volatility, probe solubility, water solubility of the organic solvent, and the possibility of the fluorescence characteristics to monitor cmc, other physicochemical properties of the probe solution also need to be comprehensively considered, such as viscosity, density, flash point, and safety.

For example, although ethylene glycol, 1,3-butanediol, and 1,5-pentanediol have low volatility and good water solubility, their high viscosity and low fluidity are not conducive to the dissolution, addition, and dispersion of probes. The density of n-butanol is low, and when the probe-butanol composition is added to the washing water solution, it is not easy to disperse or slowly disperse, which may lead to the uneven distribution of the probe in the solution. Although ethyl glycolate meets the requirements of low volatility and probe solubility of the organic solvent, and the probe solution emits strong fluorescence, its flash point is low (62°C), so much attention should be paid to the storage and safety of the probe composition.

Considering the physicochemical characteristics of various solvents and the probe solubility, NMP, NEP, polyethylene glycol 200 (PEG200), and DGME are the more preferred solvents selected, which can be used to dissolve probe molecules directly and accurately monitor the cmc. Moreover, when Nile red (NR) was used as an ACQ molecule, the inventors obtained similar selection results for the preferred types of auxiliary agents.

Specifically, the most preferred probe + auxiliary agent combination in the ACQ fluorescence probe composition of the present invention includes CUR + NMP, CUR + DGME, CUR + NEP, CUR + PEG200, NR + NMP, NR + DGME, NR + NEP, and NR + PEG200.

On the other hand, some characteristics of single solvents such as n-butanol, ethylene glycol, ethyl glycolate, 1,3-butanediol, and 1,5-pentanediol have deficiency, which can be solved by mixing with solvents with different characteristics. For example, the organic solvents with high viscosity, such as ethylene glycol, butanediol, and pentanediol, can be mixed with the solvents with good probe solubility and low viscosity, such as n-butanol or DGME, in a certain proportion; the organic solvents with low density, such as butanol, can be mixed with the solvents with high density, such as ethylene glycol or NMP, to obtain a mixed solvent with an appropriate density, so as to accelerate the dispersion rate of the probe in the washing water solution.

Likewise, the preferred solvents described above can also be mixed with other different types of solvents in different proportions to increase the application potential of the solvent in the probe composition, including but not limited to various physicochemical characteristics, safety, stability, cost, etc.

That is to say, according to the above studies of the present invention, a preferred specific combination of a probe molecule and an auxiliary agent can be directly obtained or obtained by appropriately adjusting based on various characteristics possessed by the probe molecule and the organic solvent itself.

Moreover, the inventors have found that the amount of the probe solution, mainly the organic solvent therein, added to the liquid to be tested has a certain influence on the determination results of the cmc. From the perspective of reducing the amount of the organic solvent used in the probe solution and suppressing the influence on the cmc determination results, it is preferable to reduce the amount of the organic solvent added to the surfactant solution. On the other hand, in order to ensure good fluorescence sensitivity and detection convenience, the probe solution needs to be added in such an amount to ensure a sufficient probe working concentration in the surfactant solution.

As shown in Table 6, the inventors investigated the effect of different addition amounts of the solvent in the probe solution (CUR-NMP) on the cmc test results. Here, the liquid to be tested is Supreme Biotechnology (Brilliant White) detergent solution (ZZLB), and the detector is a customized photoelectric detector (CD detector).

In addition, due to the use of the CUR-NMP single organic solvent composition system, the solvent addition amount in Table 6 can be considered equivalent to the addition amount of the probe solution. The cmc value is determined using the fitted line intersection method, i.e., according to the determination results of a fluorescence spectrophotometer, an appropriate wavelength is selected within the corresponding fluorescence emission peak range, and a fluorescence response value-concentration curve is plotted with detergent concentrations on the x-axis and fluorescence intensity on the y-axis. The plateau region and the rising region of the curve are fitted by linear regression, respectively, and the intersection point of two fitted lines is obtained. The surfactant concentration on the x-axis corresponding to the intersection point is the cmc concentration (measured value).

Table 6. Effect of solvent addition amount on cmc test results

| NMP addition amount (ul/10 ml of solution) | Probe working concentration (ug/ml) | cmc measured value (g/L) | cmc conversion value *1 (g/L) | Measured value by fluorescence spectrometry *2 (g/L) | Measured value by surface tension method (g/L) |
|---|---|---|---|---|---|
| 20 | 2 | 0.084 | 0.084 | 0.100 | 0.067 |
| 40 | 4 | 0.101 | 0.101 | | |
| 100 | | 0.108 | 0.107 | | |
| 200 | | 0.094 | 0.092 | | |
| 400 | | 0.110 | 0.106 | | |
| 1000 | | 0.187 | 0.173 | | |
| 2000 | | 0.565 | 0.471 | | |
| 5000 | | 5.012 | 3.341 | | |

*1 Conversion method: cmc conversion value = cmc measured value / (1 + solvent addition volume/sample volume).
*2 is the cmc measured values determined by a fluorescence spectrophotometer when the addition amount of NMP is 40 ul, and the probe working concentration is 4 ug/ml.

The cmc conversion values in Table 6 are the actual cmc concentrations calculated taking into account the dilution of the surfactant by the solvent. Specifically, cmc conversion concentration = cmc measured concentration / (1 + solvent addition volume / sample volume), where the solvent addition volume corresponds to the volume of the probe solution added, and the sample volume is the volume of the surfactant solution to be tested.

Since the probe solution is formed by dissolving the probe molecule in the solvent as an auxiliary agent, the solvent addition amount can be approximately considered as the addition amount of the probe solution. When the addition amount of the probe solution is small, the cmc conversion value in the table is the same as the actual cmc measured value. However, when the addition amount of the probe solution is too large, the solvent in the probe solution may result in obvious dilution for the concentration of the surfactant in the original liquid to be tested, so it is necessary to convert the original data as the determination results. For example, when the addition amount of the probe solution is 5000 ul, the cmc conversion value is 3.341 (= 5.012 / (1 + 5 ml/10 ml)). That is to say, the cmc conversion concentration has taken into account the change in solution volume and the dilution of the surfactant concentration due to the addition of the probe solution. When the addition amount of the probe solution is small, its dilution effect can be negligible.

As shown in Table 6, when the CUR-NMP probe solution is used as the probe-auxiliary agent, in 10 ml of the surfactant solution, the amount of the solvent added to the solution to be tested is preferably not more than 1000 ul (i.e., not more than 10%), more preferably not more than 400 ul (i.e., not more than 4%). In this case, the range of the cmc measured value in the table is relatively stable and close to the cmc measured value (0.100 g/L) obtained by using a fluorescence spectrophotometer and the cmc value (0.067 g/L) obtained by the surface tension method. Different solvent addition amounts will produce similar results when other organic solvents are used.

Therefore, in order to reduce the effect of the organic solvent in the auxiliary agent on cmc determination results, in the present invention, the addition amount of the probe solution (also referred to as a probe stock solution) in the liquid to be tested is suppressed to be low. Its preferred range can be set with reference to the preferred range of the solvent addition amount, i.e., the upper limit of the addition amount of the probe stock solution with respect to 10 ml of the surfactant solution is preferably below 1000 μl, more preferably below 400 μl. The lower limit of the addition amount of the probe stock solution depends on the sensitivity of the probe and the concentration of the probe in the probe stock solution, such as above 1 μl, preferably above 10 μl, and more preferably above 20 μl. The lower limit of the addition amount of the probe stock solution may be appropriately lowered at a higher probe concentration. When a mixed solvent is used, the addition amount of the probe stock solution can be converted based on the proportion of the mixed solvent and meets the preferred range of the organic solvent, i.e., solvent addition amount = the proportion of organic solvent in probe stock solution × the addition amount of probe stock solution.

At this time, the cmc determination result obtained by using a customized miniaturized photoelectric detector (CD detector) in Table 6 is in the range of 0.084 g/L to 0.107 g/L, which is close to the measured value (0.100 g/L) obtained by using a fluorescence spectrophotometer in the later example. Here, the customized miniaturized detector is a fluorescence response value detector at a specific single wavelength, and the fluorescence photometer can scan the fluorescence spectrum in the full wavelength range. Both of them belong to fluorescence detection instruments. The

former is small in size, simple in operation, and has a fast detection rate, while the latter has more spectral information and higher accuracy. Both can adjust the spectral parameters according to the corresponding fluorescence probe and can be used in various tests.

It can also be seen from Table 6 that the cmc test value determined by fluorescence spectroscopy method using a CD detector or a fluorescence spectrophotometer is slightly higher than the measured value (0.067 g/L) determined by the surface tension method. The inventors speculate that this is because when the surfactant is adsorbed and saturated on the gas-liquid surface, it will form aggregates in the solution. The cmc determined by the surface tension method is the concentration corresponding to the initial formation of aggregates, and the cmc determined by fluorescence spectroscopy is the concentration corresponding to the formation of a large number of aggregates in solution and the presence of existing fluorescent molecules in micelles as single molecules. At the beginning of micelle formation, since the number of probe molecules may be greater than the number of micelles, and there may be more than one probe molecule in each micelle, so the cmc results determined by fluorescence spectroscopy will be slightly greater than the cmc results obtained by the surface tension method.

When the addition amount of NMP is higher than the above range (1000 ul), the determination result of the cmc is significantly higher. The inventors speculate that its mechanism is as follows: NMP is a short-chain hydrophilic molecule, and its hydrophilicity may affect the hydrophobic force between surfactant molecules during the micelle formation and thus affect the formation of micelles. When the concentration of NMP is low, the effect of the hydrophilicity on the measurement result of the cmc value is small. As the concentration of NMP increases and exceeds a certain value, the degree of reducing the hydrophobic force increases significantly, and thus the cmc value increases.

Based on the above speculation, the inventors also observed the change in the cmc value at different addition amounts of the NMP solvent (without the probe) used in the CUR-NMP probe solution using the surface tension method. The results are shown in Table 7. When the addition amount of NMP is less than 10%, the cmc value determined is affected to some extent, but the effect is small. When the addition amount of NMP is less than 4%, the cmc value determined is basically not affected, and the result is basically consistent with the result determined by fluorescence spectrometry and conforms to the inference.

Table 7. Effect of solvent addition amount on cmc results in surface tension method

| Solvent content (v organic solvent / v water) | cmc [mg/l] |
|---|---|
| 0 | 0.067 |
| 0.4% | 0.076 |
| 1% | 0.073 |
| 2% | 0.101 |
| 4% | 0.082 |
| 10% | 0.131 |
| 20% | 0.220 |

Moreover, the inventors have also found that the probe working concentration in the liquid to be tested has a certain influence on cmc determination results. In the specification, a probe stock solution concentration refers to the concentration of the probe in the probe solution, and a probe working concentration refers to the concentration of the probe after a probe stock solution containing the probe is added to the surfactant aqueous solution or washing water.

The inventors have experimented with the CUR-DGME probe composition on the effect of the probe working concentration on cmc determination results. The results are shown in Table 8.

Table 8. Effect of CUR probe working concentration

| CUR probe stock solution concentration mg/ml | DGME solvent amount (per 10 ml of solution) | CUR probe working concentration ug/ml | cmc measured value g/L | Measured value by fluorescence spectrometry *1 g/L | Measured value by surface tension method g/L |
|---|---|---|---|---|---|
| 0.01 | | 0.04 | 0.055 | | |
| 0.1 | | 0.4 | 0.049 | | |
| 0.2 | | 0.8 | 0.060 | | |
| 0.4 | | 1.6 | 0.062 | | |

(continued)

| CUR probe stock solution concentration mg/ml | DGME solvent amount (per 10 ml of solution) | CUR probe working concentration ug/ml | cmc measured value g/L | Measured value by fluorescence spectrometry *1 g/L | Measured value by surface tension method g/L |
|---|---|---|---|---|---|
| 0.5 | 40 ul | 2 | 0.082 | 0.086 | 0.067 |
| 1 | | 4 | 0.103 | | |
| 2.5 | | 10 | 0.169 | | |
| 5 | | 20 | 0.396 | | |
| 10 | | 40 | 0.571 | | |
| *1 is the cmc measured values determined by a fluorescence spectrophotometer when the addition amount of DGME is 40 ul, and the probe working concentration is 4 ug/ml. | | | | | |

As shown in Table 8, the probe working concentration is closely related to the determination results of the cmc concentration. When the probe working concentration in the liquid to be tested is less than 10 ug/ml, the difference between the cmc measured value and the value determined by the surface tension method is small. With the increase of the probe working concentration, when the working concentration of CUR exceeds 20 ug/ml, the cmc measured value has a great deviation. This may be because when the probe concentration is too large, the fluorescence quenching caused by the probe aggregation occurs at the inflection point in the original curve corresponding to the micelle formation. Moreover, a second plateau region behind the rising region cannot be observed within the original concentration range, resulting in a significantly larger cmc determination result.

The inventors speculate that the mechanism is as follows: CUR is a hydrophobic ACQ molecule that can emit fluorescence only when dissolved in a good solvent. When the working concentration of CUR is low, CUR enters the micelles as a single molecule and dissolves to emit fluorescence. With the increase of the working concentration of CUR, the proportion of CUR entering the micelles as a single molecule is low, and the proportion of CUR entering the micelles as an aggregated molecule is high, so that the fluorescence at the cmc concentration is not obvious. It can be detected only when the number of micelle molecules further increases to promote more CUR molecules to enter the micelles as a single molecule. Therefore, the excessive working concentration of CUR leads to an increase in the cmc measured value.

It can be seen based on the comparative determination results of the surface tension method and fluorescence spectrometry that for the detergent solution or washing water as the target liquid to be tested, the working concentration of the probe used can be selected to be above 0.04 ug/ml, but not more than 20 ug/ml, preferably not more than 10 ug/ml. Therefore, a preferred range of the probe working concentration is 0.04-10 ug/ml, more preferably 0.4-6 ug/ml, especially 0.8-4 ug/ml.

The ACQ fluorescence probe composition of the present invention can be preserved as a stable probe solution for a long time. After adding to the sample to be tested, the cmc can be accurately determined without volatilizing the solvent, which reduces the step of waiting for the volatilization of the organic solvent, greatly improves the convenience of use in practical scenarios, and can meet the practical requirements of ACQ fluorescence probe in application fields such as the cmc determination for surfactant solution.

**(cmc determination method for surfactant solution)**

The ACQ fluorescence probe composition of the present invention can be directly used as a stable solution to determine the cmc concentration of a surfactant solution.

The cmc determination method for a surfactant solution of the present invention comprises the following steps:

liquid preparation step: preparing surfactant solutions with a series of concentrations,
probe addition step: adding a certain amount of a probe solution to each of the surfactant solutions,
detection step: detecting a fluorescence response value of each surfactant solution using a detection means, and
determination step: plotting a fluorescence response value-concentration curve having at least a first plateau region and a rising region according to the results obtained in the detection step and determining the concentration corresponding to the inflection point where the fluorescence response value changes from the first plateau region to the rising region as the cmc of the surfactant solution,
characterized in that the probe solution is the ACQ fluorescence probe composition of the present invention.

In the fluorescence response value-concentration curve with concentrations on the x-axis and fluorescence intensity or voltage value on the y-axis obtained by the determination step, the detergent solution added with the ACQ fluorescence probe composition of the present invention generally does not emit fluorescence or has a weak fluorescence intensity within a lower concentration range, and is maintained in a stable plateau region (also referred to as a first plateau region), indicating that the ACQ probe molecules are in a state of aggregation with each other in the aqueous system, and thus do not emit light or emit low fluorescence. As the concentration of the detergent increases to a specific value (cmc), the fluorescence intensity begins to increase significantly, indicating that the micelles of the detergent begin to form at this time, and the ACQ probe molecules transfer from aqueous solution to the hydrophobic inner core of the micelles. Due to the environment of good solvent, the probe molecules can exist in a separate form, thus emitting fluorescence. With the increase in the number of micelles, the fluorescence intensity of the probe also increases, and the fluorescence curve rises rapidly. When all the fluorescence probe molecules exit in micelles or surfactant aggregates as single molecules, the fluorescence intensity becomes stable again (second plateau region).

In the fluorescence response value-concentration curve, it is not necessary to have the second plateau region located behind the rising region, which is related to the relative relationship between the number of fluorescence probe molecules and the number of micelles. However, the concentration corresponding to the inflection point of the plateau region located before the rising region (first plateau region) and the rising region is necessarily the concentration (i.e., cmc) at which micelles have just started to form. Thus, where the inflection point of the change from the plateau region to the rising region of the above fluorescence response value (e.g., fluorescence intensity or voltage value) can be detected by a detector and transmitted to a decision means, the concentration corresponding to the inflection point can be determined by a determination means as the cmc measured value.

The inflection point of the change in the fluorescence response value can be determined by the fitted line intersection method and the inflection point determination method. The fitted line intersection method is to find an intersection point of the fitted line of the plateau region and the fitted line of the rising region in the obtained fluorescence response value-concentration curve and set the concentration of the detergent solution corresponding to the intersection point as cmc (see Fig. 2). The inflection point determination method is to compare the changing trend of fluorescence intensity at two previous and later data points in the obtained fluorescence response value-concentration curve, directly determine the inflection point according to the phenomenon that the change of fluorescence intensity at the later data point is significantly increased compared to the change of the fluorescence intensity at the previous data point, and set the concentration of the detergent solution corresponding to the inflection point as cmc (see Fig. 3).

The determination of cmc by the inflection point determination method is relatively simple, but the accuracy of cmc value determination is related to the setting interval of determination concentration. When the concentration interval is too large (fewer data points of determination concentration), the accuracy decreases, and the error is large. The fitted line intersection method integrates multiple data sets to plot the fitted line and calculate the intersection point, making the cmc determination more stable and accurate. Therefore, the use of the fitted line intersection method to determine the cmc is preferred.

The surfactant solution of the present invention includes at least one of an anionic surfactant, a non-ionic surfactant, a cationic surfactant, and an amphoteric surfactant. More preferably, the surfactant includes at least an anionic surfactant and/or a non-ionic surfactant.

Examples of anionic surfactants can include alkyl carboxylates, alkyl sulfates, alkyl sulfonates, alkyl ether sulfates, phosphates, and other surfactants.

Examples of non-ionic surfactants can include alkyl glucosides, alkyl alcohol ether glucosides, polyoxyethylene alkyl ethers, polyoxyethylene polyoxypropylene alkyl ethers, alkyl amine oxides, alkyl amidopropyl amine oxides, fatty acid alkanolamides, and the like.

The above surfactant may be used alone or in combination with two or more. Moreover, the surfactant solution may further include a fluorescent brightener and the like.

Moreover, the detection means used in the present invention includes an existing fluorescence spectrophotometer and a customized fluorescence photoelectric detector (simply referred to as CD detector) for the spectral characteristics of specific ACQ molecules. The excitation wavelength of the fluorescence spectrophotometer can be set to any wavelength within the wavelength range of the fluorescence excitation peak corresponding to the probe molecule. The emission wavelength can be selected from any wavelength within the wavelength range of the fluorescence emission peak. Based on the fluorescence intensity or the voltage response value curve of fluorescence, the determination of the cmc of a detergent can be realized.

The difference between the customized fluorescence photoelectric detector and the existing fluorescence spectrophotometer lies in the cost, accuracy, size, speed, modularity, etc. The fluorescence spectrophotometer has high accuracy and can distinguish red/blue shifts, but it has a high cost, large size, and poor applicability. The customized detector can only detect the target wavelength and can not distinguish red/blue shift, but it has a small size, fast detection speed, modularity, and strong applicability.

In the specification, the "fluorescence response value" in the fluorescence response value-concentration curve

means a fluorescence intensity when measured by a fluorescence spectrophotometer, and the "fluorescence response value" means a voltage value when measured by a CD detector.

The fluorescence photoelectric detector used in the present invention includes any of the following:

1) including excitation filter (430 nm), dichroic mirror, and emission filter (495 nm), light source: peak wavelength of 430 nm, waveband of 420 to 440 nm, working current: 0.02A, working voltage: 5V, the acceptable wavelength range of detector of at least 480-510 nm;
2) including excitation filter (550 nm), dichroic mirror, and emission filter (638 nm), light source: peak wavelength of 550 nm, waveband of 540 to 560 nm, working current: 0.02A, working voltage: 5V, the acceptable wavelength range of detector of at least 620-650 nm.

The fluorescence photoelectric detector described above is customized for the fluorescence spectral characteristics of the ACQ probe molecule of the present invention. Specifically, the test results for both CUR and NR ACQ molecules show that both CD detectors have good response and sensitivity.

In addition, in the present invention, the preparation of the probe composition, the preparation of the detergent solution and washing water to be tested, the addition of the probe, the fluorescence detection, the determination of the cmc value, and the like can be implemented based on high-precision metering equipment (sensor, peristaltic pump, solenoid valve) and automatic control.

For example, a probe composition stock solution is prepared in advance through an electronic balance and a volumetric flask, or a probe composition stock solution of 0.001 mg/ml -100 mg/ml can be prepared by pumping a solvent through a peristaltic pump after a probe is weighed quantitatively using a pressure sensor; various concentrations of detergent solutions/washing water to be tested can be prepared by pumping different amounts of detergent and water using a peristaltic pump; the corresponding doses of the detergent solution/washing water to be tested and the probe composition stock solution are removed using a peristaltic pump for mixing, and the amount of the organic solvent added to the washing water to be tested is controlled not to exceed 10%, and the probe working concentration is controlled not to exceed 20 uM; the change in fluorescence response values can be detected using a photoelectric sensor, and the determination can be automatically determined and controlled based on the response value results, finally outputting the cmc value determination results of the detergent.

In addition, convenience can be improved for the qualitative determination of cmc. For example, when the cmc determination method of the present invention is used to qualitatively determine whether the detergent in the liquid to be tested has reached the cmc value or not, a threshold (threshold concentration ≥ cmc value concentration) corresponding to the cmc value may be set based on the measured data. When the measured result is less than the threshold, it is determined that the cmc value is not reached, and when the measured result is greater than or equal to the threshold, it is determined that the cmc value has been reached or exceeded. In the washing industry, the threshold can be set according to the washing purpose, the required concentration of detergent, and specific washing scenarios.

**(Stain cleaning concentration determination method)**

In the washing industry, the setting standard of detergent dispensing amount is related not only to the cost-effectiveness of detergent, i.e., the cleaning efficiency, but also to the stain cleaning degree, i.e., the cleaning effect. According to extensive studies by the inventors, cleaning different stains requires different detergent concentrations. In the specification, the minimum concentration required for cleaning laundry with different stains is referred to as "stain cleaning threshold concentration $C_t$" (sometimes simply referred to as "cleaning threshold concentration $C_t$" or "threshold concentration $C_t$"), and the fluorescence response value corresponding to the threshold concentration is referred to as "stain cleaning response threshold $S_0$" (sometimes simply referred to as" cleaning response threshold $S_0$" or "response threshold $S_0$"). Typically, the stain cleaning threshold concentration $C_t$ is ≥ the critical micelle concentration (cmc) of washing water.

Stains are generally classified into three categories according to the washing principle: oil stains, color stains, and invisible stains. Oil stains include, but are not limited to, collar stains, food oil stains, cosmetic oil stains, and other stains with animal and vegetable oils or mineral oils as main components. Color stains include, but are not limited to, blood stains, fruit stains, aged yellow stains, pigment stains, dye stains, and the like. Invisible stains include milk stains, saliva stains, rice gruel stains, and other stains that are not easily visible to the naked eye, usually protein stains and starch stains.

In the present invention, different stain cleaning threshold concentrations $C_t$ may be set for oil stains, color stains, and invisible stains. In the case of actual machine washing, when the concentration of the detergent added to washing water is detected to have reached or exceeded the above stain cleaning threshold concentration, the washing water at this concentration is considered to be capable of cleaning the laundry with the stains, and the detergent concentration at this time may be determined as "stain cleaning concentration."

Therefore, in the stain cleaning concentration determination method of the present invention, according to

whether the detected concentration of the washing water has reached or exceeded the cleaning threshold concentration preset for different stains, it is possible to determine whether the washing water at the concentration can clean the laundry or not. Here, the preset cleaning threshold concentration is ≥ cmc.

The stain cleaning concentration determination method of the present invention includes the following steps:

liquid preparation step: dispensing a first predetermined amount of a detergent into washing equipment containing a predetermined amount of water and laundry, stirring and mixing well to obtain a washing water,
sampling step: sampling from the washing water and adding a small amount of a probe solution to obtain a washing water to be tested,
detection step: detecting a fluorescence response value S of the washing water to be tested using a detection means,
determination step: determining whether the concentration of the detergent in the washing water to be tested is a stain cleaning concentration according to whether the detected fluorescence response value S has reached or exceeded a preset cleaning response threshold $S_0$, wherein if the preset cleaning response threshold $S_0$ is not reached, the determination result is "No"; if the preset cleaning response threshold $S_0$ has been reached or exceeded, the determination result is "Yes," and
control step: controlling number of times of dispensing of the detergent in the liquid preparation step based on the determination result of the determination step, wherein if the determination result is "No," a second predetermined amount of the detergent continues to be dispensed in the liquid preparation step, and subsequent sampling step, detection step, and determination step are performed; if the determination result is "Yes," the dispensing of the detergent is stopped, and the determination result is outputted, or the washing equipment is started to continue washing.

Here, the probe solution may be the ACQ fluorescence probe composition of the present invention.

The preset cleaning response threshold $S_0$ in the above determination step may be a fluorescence response value corresponding to the cmc of the washing water or a fluorescence response value corresponding to the cleaning threshold concentration Ct of the washing water.

The cmc of the washing water can be determined in advance by the cmc determination method of the present invention, or in the stain cleaning concentration determination method of the present invention, by repeating the liquid preparation step to the determination step multiple times and plotting a fluorescence response value-concentration curve according to the result obtained in the detection step, the concentration corresponding to the inflection point where the fluorescence response value changes is determined as cmc.

The stain cleaning threshold concentration Ct can be determined by the actual machine washing effect, i.e., the lowest concentration confirmed to have a good cleaning effect is determined as the stain cleaning threshold concentration by using a series of detergent concentrations of washing water to actually machine wash the laundry with stains. In addition, the stain cleaning threshold concentration Ct may also be set to a fixed value greater than or equal to the cmc concentration after the cmc of the detergent solution is determined.

In the present invention, a fluorescence response value-concentration curve is plotted according to the detection result from the detection step, which generally includes two plateau regions and a rising region between them. Considering the washing effect and the cost-effectiveness of detergent, the stain cleaning threshold concentration Ct is preferably set within the range of the rising region in the curve, i.e., it is preferred to select as needed an arbitrary value between the two inflection points of the plateau regions and the rising region to set the cleaning threshold concentration Ct. The stain cleaning threshold concentration Ct may be set in consideration of the washing purpose, according to different scenario requirements, based on load/dirt (laundry load, stain type, stain amount, etc.), in different scenarios (domestic washing machine, industrial water washing equipment, etc.), and so on. When applied to the detergent dispensing control method for washing equipment, the addition amount of the detergent required during the washing process is related to the load of the fabrics to be washed and the types and degrees of stains. When the washing equipment has a large load, many and complex stains, it can be considered to set a higher threshold (for example, the fluorescence response threshold of the fluorescence photoelectric detector can be set to 0.22, corresponding to a cleaning threshold concentration of the detergent of about 0.45 g/L) to improve the cleaning rate of laundry. When the washing equipment has a small load, less and simple stains, it is considered to set a conventional threshold (the fluorescence response threshold of the fluorescence photoelectric detector can be set to 0.15, corresponding to a cleaning threshold concentration of about 0.35 g/L). In this way, the detergent dispensing amount can be saved while ensuring the washing effect, so as to obtain the most cost-effective detergent addition.

Considering that the cmc values of various detergents in different scenarios may vary, not a constant value, the stain cleaning threshold concentration Ct may be determined based on the cmc and a cleaning coefficient a (unitless coefficient), i.e., the stain cleaning threshold concentration Ct is determined by Equation 3 below:

$$Ct = cmc \times (1 + a) \qquad \text{(Equation 3)}$$

where cmc is the measured cmc of the washing water; a is a cleaning coefficient in the range of $0 \leq a \leq 10$, preferably $0.1 \leq a \leq 5$, and more preferably $0.15 \leq a \leq 3.5$; and a may be different values corresponding to different types and degrees of stains.

In addition, the preset cleaning response threshold $S_0$ in the above determination step may also be set based on the percentage of the maximum response value ($S_{max}$) of fluorescence intensity or the percentage of fluorescence increment ($S_{max}$ - $S_{blank}$), where the detergent concentration corresponding to the response value of the set percentage or increment percentage remains greater than or equal to the cmc concentration. In the specification, the percentage of the maximum response value of fluorescence intensity or the percentage of fluorescence increment is referred to as threshold percentage $\beta$, in units of 100%.

For example, the correlation between the cleaning rate of common stains such as oil stains, color stains, and invisible stains, the detergent dispensing amount, and the detection value (voltage value) of the customized fluorescence photoelectric detector is determined in industrial scenarios and domestic scenarios, respectively. The threshold percentage ($\beta$) may be arbitrarily set within the range of $0 < \beta < 1$ (i.e., the range of 0 to 100%, excluding the endpoint values). Considering that more pretreatment processes, such as pre-coating and color stain soaking, may be involved before washing in industrial washing scenarios, $\beta$ may be set to a lower value, e.g., 0.35, i.e., the cleaning response threshold $S_0$ may be set to $0.35 \times S_{max}$. In domestic washing scenarios, no pretreatment processes are usually involved, or the treatment method is relatively simple, and the mechanical force of a domestic machine is smaller relative to an industrial water washing machine, i.e., a higher detergent concentration is required in domestic scenarios to achieve a similar washing effect compared to industrial scenarios, so $\beta$ may be set to a higher value, e.g., 0.55, i.e., the cleaning response threshold $S_0$ may be set to $0.55 \times S_{max}$. Alternatively, the increment of the cleaning response threshold $S_0$ may be set to $0.2 \times (S_{max} - S_{blank})$ in industrial scenarios and $0.4 \times (S_{max} - S_{blank})$ in domestic scenarios.

That is to say, the cleaning response threshold $S_0$ is determined by Equations 4 or 5 below:

$$S_0 = \beta \times S_{max} \qquad \text{(Equation 4)}$$

$$S_0 = S_{blank} + \beta \times (S_{max} - S_{blank}) \qquad \text{(Equation 5)}$$

where $S_{max}$ is the maximum fluorescence intensity or the maximum voltage response value of the washing water, or the second plateau value in the fluorescence response value-concentration curve; $S_{blank}$ is the background fluorescence intensity or the minimum voltage response value of the washing water, or the first plateau value in the fluorescence response value-concentration curve; $\beta$ is a threshold percentage, in unit of 100%, in the range of $0 < \beta < 1$, and $\beta$ may be different values, preferably $0.1 \leq \beta \leq 0.9$, more preferably $0.2 \leq \beta \leq 0.8$, corresponding to different types and degrees of stains and different washing application scenarios.

In the stain cleaning concentration determination method of the present invention, as to the dispensing amount of detergent, the above "first predetermined amount" and "second predetermined amount" may be set as needed. In addition, as to the amount of water, the laundry load, the sampling amount of washing water, and the addition amount of probe solution, there are not particularly specified and may be appropriately set according to the requirements of actual use scenarios and the preferred range of probe working concentration.

The ACQ fluorescence probe composition of the present invention is particularly suitable for determining whether the laundry is cleaned by comparing the real-time concentration of detergent with the stain cleaning threshold concentration. The reason for this is that by comparing the fluorescence response value-concentration curves of the ACQ probe and AIE probe, it can be seen that in the curve obtained by using the ACQ fluorescence probe composition, the first inflection point from the plateau region to the rising region is cmc, and after exceeding the cmc, the fluorescence response gradually increases until reaching the second plateau region, which is very suitable for monitoring the concentrations greater than the cmc (see Fig. 2). In contrast, in the fluorescence response value-concentration curve obtained by using the AIE fluorescence probe composition (e.g., HPS), only the highest point of the curve corresponds to cmc, and a value on the y-axis (fluorescence intensity or voltage) below the highest point may correspond to two concentration values on the x-axis, and thus the concentrations greater than the cmc cannot be accurately monitored. In addition, in the curve obtained using the ACQ fluorescence probe composition, there is a relatively flat change interval between the plateau regions to facilitate the adjustment of the set value of the stain cleaning threshold concentration.

Since the curve obtained from the ACQ probe molecule is more suitable for the determination of stain cleaning concentration and the adjustment of stain cleaning threshold concentration, the ACQ fluorescence probe composition of the present invention is more advantageous than the AIE fluorescence probe composition in controlling the automatic dispensing of detergent by setting and adjusting a stain cleaning threshold concentration.

**(Detergent dispensing control method)**

One practical application field of the ACQ fluorescence probe composition of the present invention is for the dispensing control of detergents in automatic washing equipment.

In the detergent dispensing control of an automatic washing equipment, the addition amount of detergent required during the washing process is related to the amount of water, the load of washed fabrics, and the types and degrees of stains. In the present invention, the detergent can be added by means of multiple dispensing, and the dispensing amount required can be automatically determined by determining whether the concentration of the surfactant in the washing water solution is above a cmc or a cleaning threshold concentration. The present invention can provide a detergent dispensing control method, characterized in that the detergent dispensing control method comprises:

liquid preparation step: dispensing a first predetermined amount of the detergent into an inner drum in washing equipment according to the weight of washings and the amount of water fed, mixing and stirring with the water in the inner drum to obtain a washing water or a detergent solution;
sampling step: collecting a predetermined amount of the washing water or the detergent solution from the inner drum as a sample;
liquid taking out step: taking out a small amount of a probe solution and adding it to the sample; mixing step: mixing the sample and the probe solution to obtain a liquid to be tested;
detection step: detecting a fluorescence response value of the liquid to be tested and outputting a detection signal S;
determination step: receiving the detection signal S and determining whether the concentration of the detergent in the liquid to be tested has reached a critical micelle concentration or a preset cleaning threshold concentration according to whether the detection signal S has reached or exceeded a preset response threshold $S_0$, wherein the cleaning threshold concentration is greater than or equal to the critical micelle concentration; and
control step: controlling subsequent dispensing of the detergent based on the determination result of the determination step, wherein if the determination result is that the critical micelle concentration or the preset cleaning threshold concentration is not reached, continuously dispensing a second predetermined amount of the detergent into the inner drum in the liquid preparation step; if the determination result is that the critical micelle concentration or the preset cleaning threshold concentration has been reached, the dispensing of the detergent is stopped.

Here, the probe solution may be the ACQ fluorescence probe composition of the present invention.

In order to achieve the determination of the detergent dispensing control, it is necessary to output the fluorescence intensity F of the washing water detected by the fluorescence detector in the detection step as a detection signal S. The detection signal S is a voltage signal corresponding to the fluorescence intensity F of the washing water at a specific wavelength, and is output to the subsequent determination and control steps.

A series of solutions to be tested with increasing concentrations of the detergent can be prepared in a plurality of sample cells or a single sample cell in advance, or washing water can be directly sampled into a sample cell from the inner drum of the water washing equipment in real-time during the equipment is in operation and the washing is performed. By the cmc determination method for the surfactant solution of the present invention, the detection signal corresponding to the inflection point where the detected plateau region of the curve changes to the rising region is set as a response threshold $S_0$ corresponding to the critical micelle concentration cmc, or according to circumstances, a specific stain cleaning threshold concentration Ct is selected in the plateau region of the curve, and the detection signal corresponding to the stain cleaning threshold concentration Ct is set as a response threshold $S_0$ (sometimes also referred to as St) which corresponding to the cleaning threshold concentration Ct, wherein the stain cleaning threshold concentration Ct is greater than or equal to the critical micelle concentration cmc.

Then, in the above determination step, if the detection signal S is equal to or higher than the preset response threshold $S_0$, the determination result is "Yes" (the detergent concentration C has reached the cmc or the cleaning threshold concentration Ct), and at this time, the dispensing of the detergent is stopped; if the detection signal S is lower than the preset response threshold $S_0$, the determination result is "No" (the detergent concentration C has not reached the cmc or the cleaning threshold concentration Ct), and the process returns to the liquid preparation step to continue dispensing the detergent.

The cmc concentration of washing water actually used in the washing equipment is influenced by various factors (e.g., fabric type, quantity, dirt amount, water temperature, etc.). From the Gibbs free energy data analysis, the surfactant preferentially adsorbs at gas-liquid, liquid-liquid, and solid-liquid interfaces (fabrics, dirt) and then forms aggregates (e.g., micelles) in solution. It is understood that in the actual machine-washed washing water, the surfactant will preferentially adsorb to gas-liquid, solid-liquid, and liquid-liquid interfaces before forming micelles, which consumes a portion of the surfactant and thus results in the cmc of the washing water being greater than the cmc of the detergent solution. Based on this principle, the on-line monitoring of whether the detergent concentration in washing water has reached the cmc or the cleaning threshold concentration is utilized as a determination basis for automatic detergent dispensing.

In actual machine-washed washing water, the detection signal S corresponding to the inflection point where the detected plateau region of the curve changes to the rising region can also be set as a critical micelle concentration $S_0$, and the detection signal S corresponding to the determination that stains can be cleaned is set as a cleaning response threshold St. The surfactant concentration (cleaning threshold concentration Ct) corresponding to the cleaning response threshold St is usually greater than the critical micelle concentration cmc.

During actual machine washing, a cleaning response threshold St can be preset. First, a certain amount of detergent is added, and whether the fluorescence response value of the washing water has reached the cleaning response threshold St is monitored; if not, the detergent is continuously added, and whether the fluorescence response value of the washing water has reached the cleaning response threshold St is continuously monitored; if the cleaning response threshold St has been reached or exceeded, the detergent is no longer added.

In addition, a maximum addition number of times may be set during actual machine washing to avoid excessive detergent addition due to detector failure.

Therefore, it is preferred that the control step further includes a number of times limiting step: presetting a number of times threshold indicating the maximum number of times of dispensing of the detergent, wherein if the determination result remains that the critical micelle concentration or the preset cleaning threshold concentration is not reached after one or more times of dispensing of the detergent, but the number of times of dispensing of the detergent has reached the number of times threshold, the dispensing of the detergent in the liquid preparation step is stopped.

Specifically, the detergent dispensing amount control of the present invention can be carried out by the following two methods.

(Method 1) Determination by on-line monitoring whether the concentration of washing water is above the cmc

In an industrial water washing machine, when the concentration of Supreme Biotechnology laundry detergent reaches the cmc, the overall detergency reaches or approaches the plateau of detergency. It can be seen from Table 9 that the cmc concentration of the actual machine-washed Supreme washing water reaches at least 0.3 (± 0.01) g/L, which is significantly higher than the cmc of the directly prepared detergent solution. Thus, in actual machine washing, the detergent is temporarily dispensed multiple times in equal amounts, and it is preferred that the concentration of the washing water at the second to last addition is consistent with the cmc.

Table 9. cmc of Supreme laundry detergent and Supreme washing water solution

| Supreme solution type | Test method | Test result |
|---|---|---|
| Directly prepared solution | Surface tension method | 0.067 g/L |
| | Fluorescence probe method | 0.100 g/L |
| Actual machine-washed washing water | Surface tension method | 0.3 g/L |
| | Fluorescence probe method | 0.3 g/L |

(Method 2) Determination by on-line monitoring whether the concentration of washing water is above the stain cleaning threshold concentration

The determination logic is based on whether the measured concentration of the washing water is greater than the stain cleaning threshold concentration. If it is greater than or equal to the threshold concentration, it means that the cleaning point has been reached.

When 5 kg of simple stained fabric load is added to an industrial water washing machine, the fluorescence response threshold corresponding to the stain cleaning threshold concentration Ct can be 0.15 by reference. In the actual washing scenario shown in Table 10, number of times of dispensing of the detergent is preferably 1. At this time, the stains are cleaned, and the amount of detergent and water used are both less. At the end of the dispensing, the fluorescence response value is 0.161V, and the detergent concentration is 0.41 g/L, which is 37% higher than the cmc measured value of 0.3 g/L in actual machine washing (i.e., the cleaning coefficient a = 0.37) (see Table 10).

Table 10. Examples of dispensing under 5 kg load in industrial water washing machine

| Dispensing number of times | Single dispensing amount of Supreme laundry detergent /g | Total dispensing amount /g | Amount of water /L | Detergent concentration g/L | Fluorescence response value (V) | Cleaning degree |
|---|---|---|---|---|---|---|
| 1 | 12.4 | 12.4 | 30.0 | 0.41 | 0.161 | Clean |
| 2 | 7.8 | 15.6 | 32.0 | 0.49 | 0.227 | Clean |
| 3 | 4.6 | 13.8 | 34.0 | 0.41 | 0.157 | Clean |
| 4 | 3.3 | 13.2 | 36.0 | 0.37 | 0.116 | Basically clean |

**(Detergent dispensing control system)**

The present invention further provides a detergent dispensing control system for automatically controlling the dispensing of a detergent in washing equipment, the washing equipment comprising: an inner drum for holding washings to be washed and water; a storage device for storing a detergent; and a dispensing device for dispensing a first predetermined amount of the detergent into the inner drum, mixing and stirring with the water in the inner drum to obtain a washing water or a detergent solution, characterized in that,
the detergent dispensing control system comprises:

a liquid storage device for storing a probe solution;
a sampling device for collecting a predetermined amount of the washing water or the detergent solution from the inner drum as a sample;
a liquid-taking out device for taking out a small amount of the probe solution from the liquid storage device and adding it to the sample;
a mixing device for mixing the sample and the probe solution to obtain a liquid to be tested;
a detection device for detecting a fluorescence response value of the liquid to be tested and outputting a detection signal S;
a determination device for receiving the detection signal S and determining whether the concentration of the detergent in the liquid to be tested has reached a critical micelle concentration cmc or a preset cleaning threshold concentration Ct according to whether the detection signal S has reached or exceeded a preset response threshold $S_0$, wherein the cleaning threshold concentration Ct is greater than or equal to the critical micelle concentration cmc;
a cmc determination device for dispensing a predetermined amount of the detergent into the inner drum in batches using the dispensing device when there are no washings in the inner drum, repeatedly performing multiple sets of determinations using the liquid storage device, the sampling device, the liquid-taking out device, the mixing device, and the detection device, and determining the critical micelle concentration of the detergent solution according to multiple detection data corresponding to different detergent concentrations output by the detection device; and
a control device for controlling the subsequent dispensing of the detergent by the dispensing device of the washing equipment based on the determination result of the determination device,
wherein if the determination result of the determination device is that the critical micelle concentration cmc or the preset cleaning threshold concentration Ct is not reached, the control device controls the dispensing device to continue dispensing a second predetermined amount of the detergent into the inner drum of the washing equipment; if the determination result of the determination device is that the critical micelle concentration cmc or the preset cleaning threshold concentration Ct has been reached or exceeded, the control device controls the dispensing device to stop dispensing the detergent;
wherein the probe solution may be the ACQ fluorescence probe composition of the present invention.

In one aspect of the detergent dispensing control system of the present invention, the control device may control the subsequent dispensing of the detergent by the dispensing device of the washing equipment based on the determination result of the determination device.
Here, the cleaning response threshold $S_0$ is a fluorescence response value corresponding to the critical micelle concentration cmc of the detergent solution, or a fluorescence response value corresponding to the stain cleaning threshold concentration Ct,
**[0203]** The critical micelle concentration cmc is a pre-determined critical micelle concentration of the detergent solution,

or a critical micelle concentration of the detergent solution or washing water determined on-line by the cmc determination device. The cleaning threshold concentration Ct is calculated using Equation 3 below:

$$Ct = cmc \times (1 + a) \qquad \text{(Equation 3)}$$

where a is a cleaning coefficient in the range of $0 \leq a \leq 10$, and a may be different values corresponding to different types and degrees of stains.

Alternatively, the cleaning response threshold $S_0$ is determined by Equations 4 or 5 below:

$$S_0 = \beta \times S_{max} \qquad \text{(Equation 4)}$$

$$S_0 = S_{blank} + \beta \times (S_{max} - S_{blank}) \qquad \text{(Equation 5)}$$

where $S_{max}$ is the maximum fluorescence intensity or the maximum voltage response value of the washing water, or the second plateau value in the fluorescence response value-concentration curve of the washing water; $S_{blank}$ is the background fluorescence intensity or the minimum voltage response value of the washing water, or the first plateau value in the fluorescence response value-concentration curve of the washing water; $\beta$ is a threshold percentage, in unit of 100%, in the range of $0 < \beta < 1$, and $\beta$ may be different values corresponding to different types and degrees of stains.

Preferably, the control device further sets a number of times threshold indicating the maximum number of times of dispensing of the detergent, wherein if the determination result remains that the critical micelle concentration or the preset cleaning threshold concentration is not reached after one or more times of dispensing of the detergent by the dispensing device but the number of times of dispensing of the detergent has reached the number of times threshold, the control device controls the dispensing device to stop dispensing the detergent.

Examples

Hereinafter, the present invention is described more specifically by way of examples, but the present invention is not limited to the following examples without departing from the spirit thereof.

(Example 1)

The cmc value of Supreme Biotechnology (Brilliant White) detergent solution was detected using a CUR-DGME probe composition.

<1> Preparation of CUR-DGME fluorescence probe composition:

The CUR probe was accurately weighed into a clean beaker, and DGME was added. The solution was transferred into a volumetric flask for constant volume, so that the final stock solution concentration of CUR-DGME probe composition was 1 mg/ml.

<2> Preparation of detergent solution to be tested:

Supreme Biotechnology (Brilliant White) detergent (Batch No. AHA 20260206, produced by Blue Moon Co., abbreviated as ZZLB) was prepared into a series of concentrations of detergent solutions, including 0.02 g/L, 0.05 g/L, 0.1 g/L, 0.2 g/L, 0.5 g/L, 1 g/L, 2 g/L, 10 g/L, and 20 g/L using the weighing method or gradient dilution method.

<3> Addition and treatment of probe composition:

40 uL of the CUR-DGME probe composition was accurately pipetted into 10 mL of the detergent solution to be tested, so that the probe working concentration in the detergent solution to be tested was 4 ug/mL (not considering the slight volume change).

<4> Fluorescence intensity detection:

The spectral parameters of a fluorescence spectrophotometer were set as follows: excitation wavelength Ex = 430 nm, slit width of 5 nm, scanning speed of 1200 nm/min, emission wavelength scanning range of 440-700 nm. 2 mL of the mixed detergent solution to be tested containing the probe was accurately transferred into a fluorescent colorimetric

dish. The fluorescence emission of the solutions with different detergent concentrations was determined using the fluorescence spectrophotometer. The scanning results are shown in Fig. 1.

<5> Determination of cmc value:

Referring to the results shown in Fig. 1, the peak height data at the maximum emission wavelength Em = 495 nm were selected as the fluorescence response values of the target detergent solution to be tested. The fluorescence response values were used to plotted against the detergent concentrations. The results are shown in Fig. 2. Based on the fluorescence response value (fluorescence intensity)-detergent concentration curve in Fig. 2, the fitted line of the plateau region and the fitted line of the curve of the rising region were obtained, respectively. The concentration coordinate corresponding to the intersection point of the two fitted lines was the cmc value of the detergent.
As can be seen from Fig. 2, the cmc of the directly prepared Supreme Biotechnology (Brilliant White) detergent solution was about 0.1 g/L.

(Example 2)

The cmc value of Supreme Biotechnology (Brilliant White) washing water was detected using an NR-NMP composition.

<1> Preparation of NR-NMP fluorescence probe composition:

The NR probe was accurately weighed into a clean beaker, and NMP was added for direct dissolution. The solution was transferred into a volumetric flask for constant volume, so that the final stock solution concentration of NR-NMP probe composition as 1 mM.

<2> Preparation of washing water to be tested:

The preparation parameters of Supreme Biotechnology (Brilliant White) washing water were as follows: Supreme Biotechnology (Brilliant White) detergent (Batch No. AHA 20260206) + 12 types of stained cloths (carbon black, clay, protein, whole egg, blood stain, sebum, vegetable oil, lipstick, beef tallow, rice starch, etc.) + 2.5 kg of laundry load, water quality: 250 ppm hard water, washing equipment: drum washing machine, the amount of water pre-fed: 13 L.
The washing water to be tested with different detergent concentrations was prepared by adding different amounts of Supreme Biotechnology (Brilliant White) detergent using the same stained cloth, laundry load, water quality, and washing equipment. The converted concentrations included 0.025 g/L, 0.075 g/L, 0.15 g/L, 0.3 g/L, 0.6 g/L, 0.9 g/L, 1.2 g/L, 1.5 g/L, 1.8 g/L, and 2.4 g/L.

<3> Addition and treatment of probe composition:

20 uL of the NR-NMP probe stock solution was accurately pipetted into 10 mL of the washing water to be tested, so that the probe working concentration in the washing water to be tested was 2 uM (not considering the slight volume change).

<4> Fluorescence intensity detection:

10 ml of the washing water to be tested containing the probe was transferred into a glass sample bottle. The fluorescence response values (voltage values) of the washing water at different detergent concentrations were determined by a customized fluorescence photoelectric detector (including excitation filter (550 nm), dichroic mirror, and emission filter (638 nm), light source: peak wavelength of 550 nm, waveband of 540 to 560 nm, working current: 0.02A, working voltage: 5V).

<5> Determination of cmc value:

According to the results obtained by the customized fluorescence photoelectric detector, the fluorescence response values were plotted against the washing water concentrations. The results are shown in Fig. 3. Based on the fluorescence response value (voltage value)-detergent concentration curve of Fig. 3, the inflection point of the curve could be directly determined as corresponding to the cmc value of the detergent.
As can be seen from Fig. 3, the cmc value of Supreme Biotechnology (Brilliant White) washing water was about 0.3 g/L.

(Example 3)

Referring to Examples 1 or 2, Supreme Biotechnology (Brilliant White) detergent solution to be tested was prepared, and the types of the probe and the auxiliary agent in the fluorescence probe composition were adjusted, where the probe included CUR and NR, and the auxiliary agent included BUT, EG, NMP, and PEG200. The detection was performed using a customized CD detector. The obtained fluorescence response value (voltage value)-detergent concentration curves are shown in Fig. 4. Here, since the detection signal of NR-EG is weak, its result is not shown in Fig. 4(B).

As can be seen from Fig. 4, the determination of the cmc value of the detergent solution could be achieved using various combinations of the probe and the auxiliary agent in the fluorescence probe composition of the present invention, based on the change curves of the characteristic emission peaks in the obtained fluorescence response value (voltage value)-detergent concentration curves and using the fitted line intersection method or inflection point determination method. Here, the use of NMP and PEG200 as the auxiliary agents resulted in more consistent curves, indicating that they have less effect on the cmc determination results and are the more preferred auxiliary agents of the present invention.

(Example 4)

The detergent to be tested was adjusted to other commercially available brands of detergent solutions, including GB, LYL, AM, CN, WLS, LBJH, SGY, TZ, etc. The meanings of abbreviations for each detergent are shown in Table 11.

Determination was carried out in the same manner as in Examples 1 or 2, except that the detergent type was changed to the detergent shown in Table 11. The determination results are shown in Table 11 below.

Table 11

| Abbreviation | Detergent | cmc determination result g/L | | |
|---|---|---|---|---|
| | | Surface tension method | CUR probe composition | NR probe composition |
| GB | National standard laundry detergent | 0.181 | 0.251 | 0.208 |
| LYL | Brand A deep clean laundry detergent | 0.147 | 0.219 | 0.185 |
| LBJH | Brand B laundry essence | 0.115 | 0.103 | 0.105 |
| WLS | Brand C aerobic laundry essence | 0.190 | 0.251 | 0.213 |
| SGY | Brand D soft laundry detergent | 0.199 | 0.269 | 0.253 |
| TZ | Brand E full-effect 360 laundry detergent | 0.151 | 0.206 | 0.157 |
| CN | Brand F low-foam laundry detergent | 0.161 | 0.239 | 0.192 |
| AM | Brand G sterilization and mite-removing laundry detergent | 0.147 | 0.195 | 0.144 |
| ZZLB | Supreme Biotechnology (Bright White) liquid laundry detergent | 0.067 | 0.097 | / (Not determined) |
| ZZJJ | Supreme Biotechnology (Clean) liquid laundry detergent | 0.066 | 0.080 | 0.074 |

Fig. 5 is a graph showing the curves obtained by determining the cmc of the above various brands of detergent solutions using the surface tension method.

Fig. 6 is a graph showing fluorescence response value-detergent concentration curves obtained by determining the cmc of the above various brands of detergent solutions using two ACQ fluorescence probe compositions by a fluorescence spectrophotometer, in which (A) illustrates CUR probe composition; (B) illustrates NR probe composition.

As can be seen from Table 11 and Figs. 5 and 6, the probe composition of the present invention could be suitable for determining the cmc of various commercially available detergents by fluorescence spectrometry, and the determination results were basically consistent with the cmc results determined by the conventional surface tension method, errors are within acceptable limits and do not affect actual use.

(Example 5)

The detergent solution to be tested was adjusted to a directly prepared detergent solution and washing water for use in different machine washing scenarios (industrial machine washing or domestic machine washing), where some detergents contained a fluorescent brightener. The cmc determination was carried out in the same manner as in Examples 1 or 2 using two ACQ fluorescence probe compositions of the present invention, i.e., (A) CUR probe composition and (B) NR probe composition. The obtained fluorescence response value-detergent concentration curves are shown in Fig. 7.

As can be seen from Fig. 7, the probe composition of the present invention could be suitable for determining the cmc of a detergent solution or washing water in various use scenarios by fluorescence spectrometry, and the determination results were basically consistent. The cmc concentration of the actual machine-washed washing water was greater than the cmc concentration of the directly prepared detergent solution, and the effect of the fluorescent brightener on the results was small, and do not affect actual use.

(Example 6)

The detergent solution to be tested was adjusted to other commercially available products containing a surfactant component, such as softener, oxygen bleaching agent, and disinfectant. The determination was carried out in the same manner as in Examples 1 or 2, with the result that the determinations of the cmc value of the detergent could be achieved.

Fig. 8 is a graph showing fluorescence response value-detergent concentration curves obtained by testing the cmc of other types of products (softener, oxygen bleaching agent, disinfectant) containing a surfactant component using the fluorescence probe composition of the present invention, in which (A) illustrates CUR probe composition; (B) illustrates NR probe composition. As can be seen from the results of Fig. 8, for other types of products added with a surfactant, the fluorescence intensity response value could still be determined by the fluorescence probe method using the fluorescence probe composition of the present invention, and the result of determining the cmc value had a strong correlation with the addition amount of the surfactant in the product, indicating that the fluorescence probe composition of the present invention has strong applicability.

In addition, as can be seen from Fig. 8, when the concentration of the softener was very high, an increase in the concentration of the softener caused a significant decrease in the clarity of the solution, resulting in a decrease in the light transmittance of the solution. Therefore, the curve tends to decrease after reaching the highest point.

(Example 7)

Referring to Examples 1 and 3, Supreme Biotechnology (Brilliant White) detergent solution was prepared. The CUR probe composition (probe stock solution) with a probe concentration of 0.001 mg/ml was used and adjusted to the addition amount of 400 ul, or the NR probe composition with a probe concentration of 100 mg/ml was used and adjusted to the addition amount of 1 ul, so that the amount of the organic solvent (auxiliary agent) added to the washing water to be tested and the probe working concentration both met the preferred range for determining the present invention (i.e., the addition amount of solvent did not exceed 4%, and the probe working concentration did not exceed 10 ug/ml). Determination was carried out using a CD detector in the above two cases.

The determination results are shown in Table 12. The cmc results determined in the two cases were 0.061 g/l and 0.171 g/l, respectively, indicating that the determination of the cmc of Supreme Biotechnology (Brilliant White) detergent could be achieved. By comparing the measured values with the results at the same probe working concentration in Table 8 (Reference Examples 1 and 2), the errors were both within the allowable range. It can be seen that when the addition amount of the probe solution and the working concentration of the probe are within the range required by the present invention, the determination of the cmc value of the detergent can be achieved, and its accuracy meets the requirements of the practical level.

Table 12

| | Addition amount of probe stock solution ul/10 ml | Concentration of probe stock solution mg/ml | Probe working concentration ug/ml | cmc result g/l |
|---|---|---|---|---|
| Example 7 | 400 | 0.001 | 0.04 | 0.061 |
| | 1 | 100 | 10 | 0.171 |
| Reference Example 1 | 40 | 0.01 | 0.04 | 0.055 |
| Reference Example 2 | 40 | 2.5 | 10 | 0.169 |

(Example 8)

In order to achieve the miniaturization of washing equipment or detergent dispensing control system, the following fluorescence photoelectric detector was customized, with specifications: 1) including excitation filter (430 nm), dichroic mirror, and emission filter (495 nm), light source: peak wavelength of 430 nm, waveband of 420 to 440 nm, working current: 0.02A, working voltage: 5V, the acceptable wavelength range of detector of at least 480-510 nm; 2) including excitation filter (550 nm), dichroic mirror, and emission filter (638 nm), light source: peak wavelength of 550 nm, waveband of 540 to 560 nm, working current: 0.02A, working voltage: 5V, the acceptable wavelength range of detector of at least 620-650 nm.

Referring to Examples 1 or 2, the cmc of an aqueous solution of Supreme Biotechnology (Bright White) laundry detergent was determined by a fluorescence spectrophotometer and the customized fluorescence photoelectric detector above, respectively. The results are shown in Table 13 below.

Table 13. Comparison of data from Fluorescence Probe Method measured by customized fluorescence photoelectric detector and fluorescence spectrophotometer

| Sample | | cmc value (g/L) test results | | | | |
|---|---|---|---|---|---|---|
| | | CUR | | NR | | |
| Detergent | Solvent for probe (auxiliary agent) | By Fluorescence spectrophoto meter | By Customized fluorescence photoelectric detector | By Fluorescence spectrophoto meter | By Customized fluorescence photoelectric detector | Surface tension method |
| Aqueous solution of Supreme Biotechnolo gy (Bright White) laundry detergent | DGME | 0.086 | 0.114 | 0.089 | 0.074 | 0.067 |
| | Ethylene glycol | 0.102 | 0.121 | 0.091 | / * | |
| | Polyethylene glycol | 0.094 | 0.113 | 0.062 | 0.069 | |
| | NMP | 0.100 | 0.116 | 0.088 | 0.066 | |
| * Due to the poor solubility (Sparingly soluble) of NR in ethylene glycol, no effective fluorescence signal was detected using the customized fluorescence photoelectric detector when added to the detergent solution to be tested, resulting in no results. | | | | | | |

As can be seen from Table 13, the test results obtained by the customized fluorescence photoelectric detector of the present invention had repeatability and high accuracy and can be applied to miniaturized washing equipment.

Industrial Availability

The ACQ fluorescence probe composition of the present invention can be stored as a stable probe solution for a long time, can be directly used for the cmc determination of a surfactant solution and the determination of stain cleaning concentration, and particularly has important applications in the detergent dispensing control of industrial water washing equipment, domestic washing machine, and domestic washing and drying machine.

## Claims

**1.** An ACQ fluorescence probe composition, **characterized in that** the ACQ fluorescence probe composition is a probe solution for directly determining the cmc concentration of a surfactant and comprises a probe molecule and an auxiliary agent, wherein

the probe molecule is a fluorescent molecule with aggregation-caused quenching (ACQ) property, the auxiliary agent comprises one or more non-volatile organic solvents having a boiling point above 100°C, and
a distance of Hansen solubility parameters i.e., an HSP distance Ra between the probe molecule and the organic solvent,, is below 17 $(MPa)^{1/2}$.

2. The ACQ fluorescence probe composition according to claim 1, wherein the Hansen solubility parameter (HSP) $\delta$ of the probe molecule is 15 $(MPa)^{1/2}$ to 35 $(MPa)^{1/2}$.

3. The ACQ fluorescence probe composition according to claim 1, wherein the solubility classification of the probe molecule in the auxiliary agent is above "soluble."

4. The ACQ fluorescence probe composition according to any one of claims 1 to 3, wherein
the difference of Hansen solubility parameters ($\Delta\delta$) between the auxiliary agent and the probe molecule is -3 $(MPa)^{1/2}$ to +12 $(MPa)^{1/2}$.

5. The ACQ fluorescence probe composition according to any one of claims 1 to 3, wherein the viscosity of the auxiliary agent is below 30 mPa·s.

6. The ACQ fluorescence probe composition according to any one of claims 1 to 3, wherein the auxiliary agent soluble with water and has a density of 0.9 $g/cm^3$ to 1.2 $g/cm^3$.

7. The ACQ fluorescence probe composition according to any one of claims 1 to 3, wherein
the flash point of the auxiliary agent is above 60°C.

8. The ACQ fluorescence probe composition according to any one of claims 1 to 3, wherein
the probe molecule is an ACQ molecule with a luminescence strategy based on a change in fluorescence intensity or a change in characteristic wavelength, including an ACQ molecule with a blue-shifted characteristic wavelength, an ACQ molecule with a red-shifted characteristic wavelength, and an ACQ molecule with an unchanged characteristic wavelength.

9. The ACQ fluorescence probe composition according to any one of claims 1 to 3, wherein

 the probe molecule is one or more kinds of ACQ molecules selected from curcumin (CUR), Nile red (NR), coumarin (C480), rhodamine B (RhB), N-phenyl-1-naphthylamine (NPN), and pyrene (PYR), and
 the auxiliary agent comprises one or more kinds of organic solvents selected from n-butanol, ethylene glycol, N-methylpyrrolidone (NMP), N-ethylpyrrolidone (NEP), dimethylformamide (DMF), diethylene glycol monoethyl ether (DGME), ethyl glycolate, polyethylene glycol 200 (PEG200), 1,3-butanediol, and 1,5-pentanediol.

10. The ACQ fluorescence probe composition according to any one of claims 1 to 3, wherein

 the probe molecule is at least one kind of ACQ molecule selected from curcumin (CUR), Nile red (NR), and coumarin (C480), and
 the auxiliary agent comprises at least one kind of organic solvent selected from N-methylpyrrolidone (NMP), N-ethylpyrrolidone (NEP), polyethylene glycol 200 (PEG200), and diethylene glycol monoethyl ether (DGME).

11. A cmc determination method for a surfactant solution, **characterized in that** the cmc determination method sequentially comprises the following steps:

 liquid preparation step: preparing surfactant solutions with a series of concentrations,
 probe addition step: adding a certain amount of a probe solution to each of the surfactant solutions,
 detection step: detecting a fluorescence response value of each surfactant solution using a detection means, and
 determination step: plotting a fluorescence response value-concentration curve having at least a first plateau region and a rising region according to the results obtained in the detection step and determining the concentration corresponding to the inflection point where the fluorescence response value changes from the first plateau region to the rising region as the cmc of the surfactant solution,
 wherein the probe solution is the ACQ fluorescence probe composition according to any one of claims 1 to 10.

12. The cmc determination method according to claim 11, wherein
in the determination step, the concentration corresponding to the intersection point of the fitted line of the first plateau region and the fitted line of the rising region in the fluorescence response value-concentration curve is determined as the cmc of the surfactant solution.

13. The cmc determination method according to claims 11 or 12, wherein

with respect to 10 ml of the surfactant solution, the addition amount of the solvent of the probe solution is not more than 400 μl, and the probe working concentration of the probe molecule is not more than 10 ug/ml.

**14.** The cmc determination method according to claims 11 or 12, wherein
the surfactant comprises at least one of an anionic surfactant, a non-ionic surfactant, and an amphoteric surfactant.

**15.** The cmc determination method according to claims 11 or 12, wherein
the surfactant solution further comprises a fluorescent brightener.

**16.** A stain cleaning concentration determination method, **characterized in that** the stain cleaning concentration determination method comprises the following steps:

liquid preparation step: dispensing a first predetermined amount of a detergent into washing equipment containing a predetermined amount of water and laundry, stirring and mixing well to obtain a washing water,
sampling step: sampling from the washing water and adding a small amount of a probe solution to obtain a washing water to be tested,
detection step: detecting a fluorescence response value S of the washing water to be tested using a detection means,
determination step: determining whether the concentration of the detergent in the washing water to be tested is a stain cleaning concentration according to whether the detected fluorescence response value S has reached or exceeded a preset cleaning response threshold $S_0$, wherein if the preset cleaning response threshold $S_0$ is not reached, the determination result is "No"; if the preset cleaning response threshold $S_0$ has been reached or exceeded, the determination result is "Yes," and
control step: controlling subsequent dispensing of the detergent in the liquid preparation step based on the determination result of the determination step, wherein if the determination result is "No," the process returns to the liquid preparation step to continue dispensing a second predetermined amount of the detergent, and subsequent sampling step, detection step, and determination step are performed; if the determination result is "Yes," the dispensing of the detergent is stopped, and the determination result is outputted,
wherein the probe solution is the ACQ fluorescence probe composition according to any one of claims 1 to 10.

**17.** The stain cleaning concentration determination method according to claim 16, wherein

the cleaning response threshold $S_0$ is a fluorescence response value corresponding to the critical micelle concentration cmc of the washing water or a fluorescence response value corresponding to a stain cleaning threshold concentration Ct,
the stain cleaning threshold concentration Ct is the minimum concentration required for cleaning laundry with different stains, determined by Equation 3 below:

$$Ct = cmc \times (1 + a) \qquad \text{(Equation 3)}$$

where cmc is the critical micelle concentration of the washing water, a is a cleaning coefficient in the range of $0 \leq a \leq 10$, and a may be different values corresponding to different types and degrees of stains.

**18.** The stain cleaning concentration determination method according to claim 16, wherein

the cleaning response threshold $S_0$ is determined by Equations 4 or 5 below:

$$S_0 = \beta \times S_{max} \qquad \text{(Equation 4)}$$

$$S_0 = S_{blank} + \beta \times (S_{max} - S_{blank}) \qquad \text{(Equation 5)}$$

where $S_{max}$ is the maximum fluorescence intensity or the maximum voltage response value of the washing water, or the second plateau value in the fluorescence response value-concentration curve of the washing water; $S_{blank}$ is the background fluorescence intensity or the minimum voltage response value of the washing water, or the first plateau value in the fluorescence response value-concentration curve of the washing water; β is a threshold percentage, in unit of 100%, in the range of 0 < β < 1, and β may be different values corresponding to different types and degrees of stains.

**19.** A detergent dispensing control method, **characterized in that** the detergent dispensing control method comprises the following steps:

liquid preparation step: dispensing a first predetermined amount of the detergent into an inner drum in washing equipment according to the weight of washings and the amount of water fed, mixing and stirring with the water in the inner drum to obtain a washing water or a detergent solution;
sampling step: collecting a predetermined amount of the washing water or the detergent solution from the inner drum as a sample;
liquid taking out step: taking out a small amount of a probe solution and adding it to the sample;
mixing step: mixing the sample and the probe solution to obtain a liquid to be tested;
detection step: detecting a fluorescence response value of the liquid to be tested and outputting a detection signal S;
determination step: receiving the detection signal S and determining whether the concentration of the detergent in the liquid to be tested has reached a critical micelle concentration cmc or a preset cleaning threshold concentration Ct according to whether the detection signal S has reached or exceeded a preset response threshold $S_0$, wherein the cleaning threshold concentration Ct is greater than or equal to the critical micelle concentration cmc; and
control step: controlling subsequent dispensing of the detergent based on the determination result of the determination step, wherein if the determination result is that the critical micelle concentration or the preset cleaning threshold concentration is not reached, the process returns to the liquid preparation step to continue dispensing a second predetermined amount of the detergent into the inner drum; if the determination result is that the critical micelle concentration or the preset cleaning threshold concentration has been reached, the dispensing of the detergent is stopped,
wherein the probe solution is the ACQ fluorescence probe composition according to any one of claims 1 to 10.

**20.** The detergent dispensing control method according to claim 19, wherein
the control step further comprises a number of times limiting step: presetting a number of times threshold indicating the maximum number of times of dispensing of the detergent, wherein if the determination result of the determination step remains that the critical micelle concentration or the preset cleaning threshold concentration is not reached after one or more times of dispensing of the detergent, but the number of times of dispensing of the detergent has reached the number of times threshold, the dispensing of the detergent in the liquid preparation step is stopped.

**21.** A detergent dispensing control system for automatically controlling the dispensing of a detergent in washing equipment, the washing equipment comprising: an inner drum for holding washings to be washed and water; a storage device for storing a detergent; and a dispensing device for dispensing a first predetermined amount of the detergent into the inner drum, mixing and stirring with the water in the inner drum to obtain a washing water or a detergent solution, **characterized in that**,
the detergent dispensing control system comprises:

a liquid storage device for storing a probe solution;
a sampling device for collecting a predetermined amount of the washing water or the detergent solution from the inner drum as a sample;
a liquid-taking out device for taking out a small amount of the probe solution from the liquid storage device and adding it to the sample;
a mixing device for mixing the sample and the probe solution to obtain a liquid to be tested;
a detection device for detecting a fluorescence response value of the liquid to be tested and outputting a detection signal S;
a determination device for receiving the detection signal S and determining whether the concentration of the detergent in the liquid to be tested has reached a critical micelle concentration cmc or a preset cleaning threshold concentration Ct according to whether the detection signal S has reached or exceeded a preset response threshold $S_0$, wherein the cleaning threshold concentration Ct is greater than or equal to the critical micelle concentration cmc;
a cmc determination device for dispensing a predetermined amount of the detergent into the inner drum in batches using the dispensing device when there are no washings in the inner drum, repeatedly performing multiple sets of determinations using the liquid storage device, the sampling device, the liquid-taking out device, the mixing device, and the detection device, and determining the critical micelle concentration of the detergent solution according to multiple detection data corresponding to different detergent concentrations output by the detection device; and

a control device for controlling the subsequent dispensing of the detergent by the dispensing device of the washing equipment based on the determination result of the determination device, wherein if the determination result of the determination device is that the critical micelle concentration cmc or the preset cleaning threshold concentration Ct is not reached, the control device controls the dispensing device to continue dispensing a second predetermined amount of the detergent into the inner drum of the washing equipment; if the determination result of the determination device is that the critical micelle concentration cmc or the preset cleaning threshold concentration Ct has been reached or exceeded, the control device controls the dispensing device to stop dispensing the detergent;

wherein the probe solution is the ACQ fluorescence probe composition according to any one of claims 1 to 10.

**22.** The detergent dispensing control system according to claim 21, wherein

the cleaning response threshold $S_0$ is a fluorescence response value corresponding to the critical micelle concentration cmc of the detergent solution or a fluorescence response value corresponding to the stain cleaning threshold concentration Ct,

the critical micelle concentration cmc is a pre-determined critical micelle concentration of the detergent solution, or a critical micelle concentration of the detergent solution or washing water determined on-line by the cmc determination device,

the cleaning threshold concentration Ct is calculated using Equation 3 below:

$$Ct = cmc \times (1 + a) \qquad \text{(Equation 3)}$$

where a is a cleaning coefficient in the range of $0 \leq a \leq 10$, and a may be different values corresponding to different types and degrees of stains;

or the cleaning response threshold $S_0$ is determined by Equations 4 or 5 below:

$$S_0 = \beta \times S_{max} \qquad \text{(Equation 4)}$$

$$S_0 = S_{blank} + \beta \times (S_{max} - S_{blank}) \qquad \text{(Equation 5)}$$

where $S_{max}$ is the maximum fluorescence intensity or the maximum voltage response value of the washing water, or the second plateau value in the fluorescence response value-concentration curve of the washing water; $S_{blank}$ is the background fluorescence intensity or the minimum voltage response value of the washing water, or the first plateau value in the fluorescence response value-concentration curve of the washing water; $\beta$ is a threshold percentage, in unit of 100%, in the range of $0 < \beta < 1$, and $\beta$ may be different values corresponding to different types and degrees of stains.

**23.** The detergent dispensing control system according to claims 21 or 22, wherein
the control device further sets a number of times threshold indicating the maximum number of times of dispensing of the detergent, wherein if the determination result of the determination device remains that the critical micelle concentration or the preset cleaning threshold concentration is not reached after one or more times of dispensing of the detergent by the dispensing device but the number of times of dispensing of the detergent has reached the number of times threshold, the control device controls the dispensing device to stop dispensing the detergent.

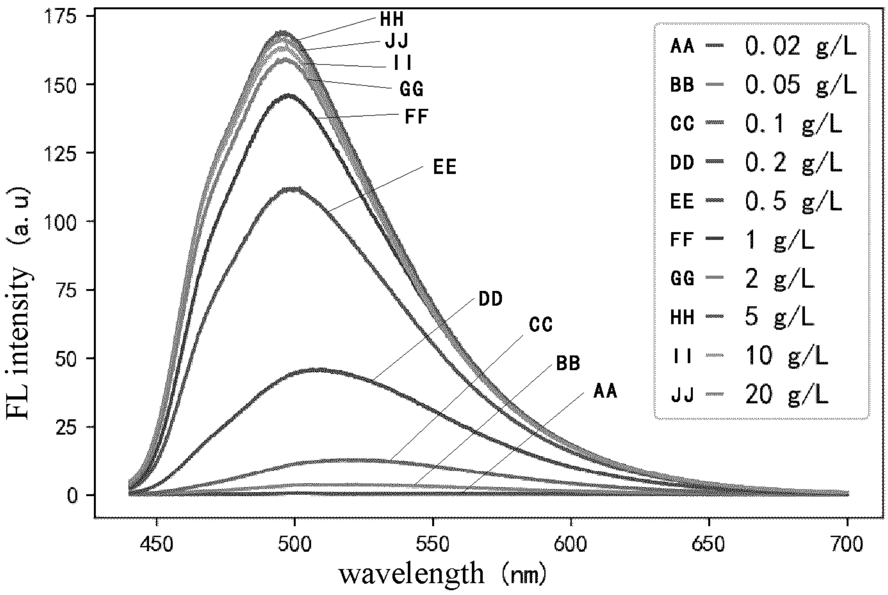
FL intensity (a.u)
wavelength (nm)
AA — 0.02 g/L
BB — 0.05 g/L
CC — 0.1 g/L
DD — 0.2 g/L
EE — 0.5 g/L
FF — 1 g/L
GG — 2 g/L
HH — 5 g/L
II — 10 g/L
JJ — 20 g/L
HH
JJ
II
GG
FF
EE
DD
CC
BB
AA
175
150
125
100
75
50
25
0
450
500
550
600
650
700

Fig. 1

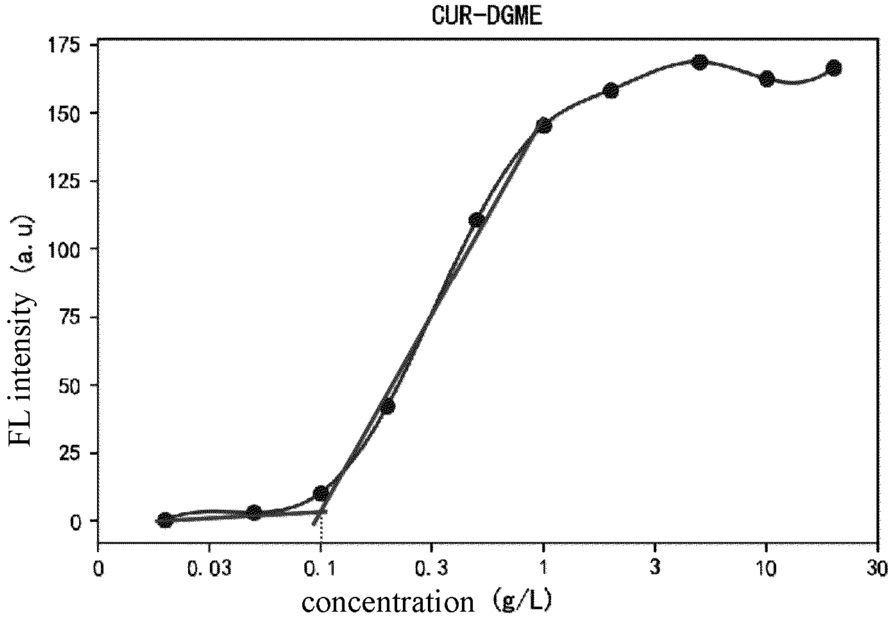
CUR-DGME
175
150
125
100
75
50
25
0
FL intensity (a. u)
0
0. 03
0. 1
0. 3
1
3
10
30
concentration (g/L)

Fig. 2

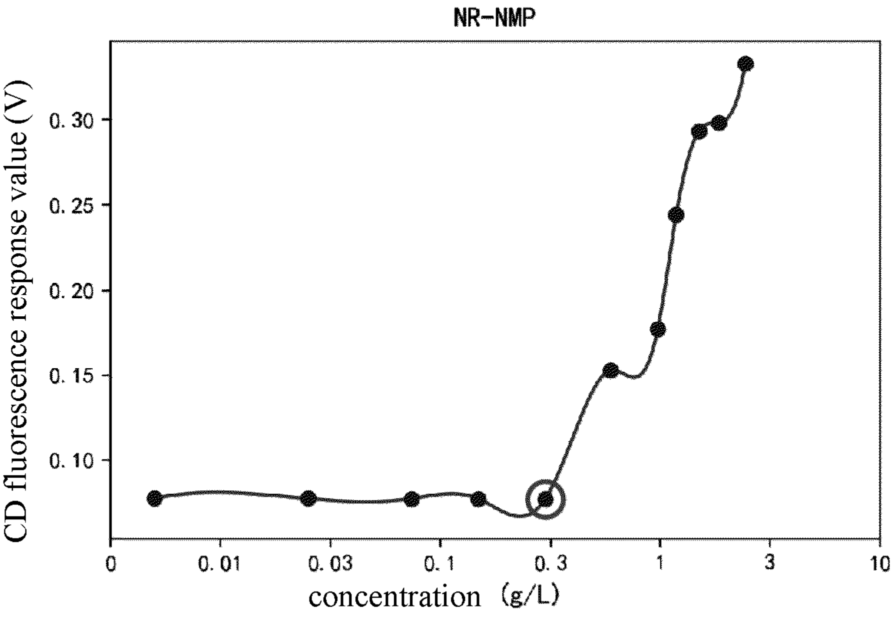
NR-NMP
0. 30
0. 25
0. 20
0. 15
0. 10
CD fluorescence response value (V)
0
0. 01
0. 03
0. 1
0. 3
1
3
10
concentration (g/L)

Fig. 3

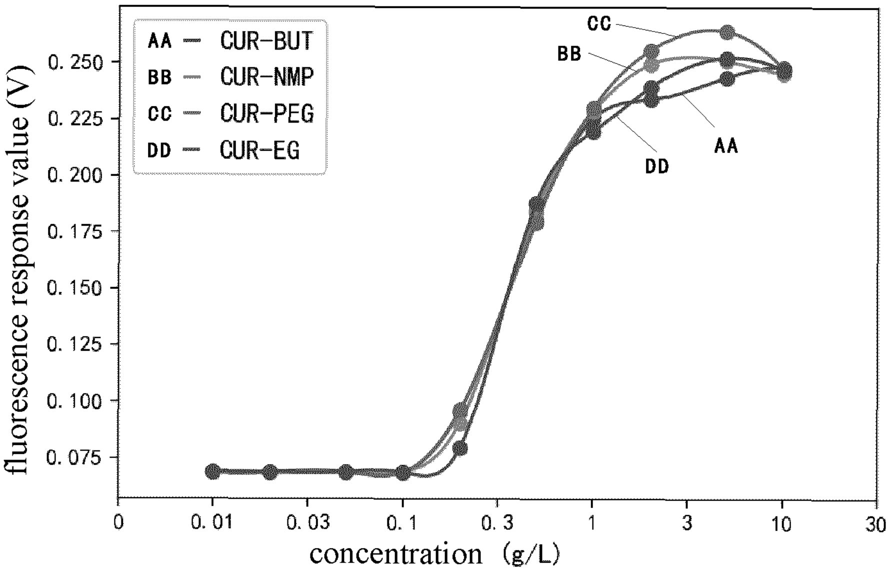


(A) CUR probe composition

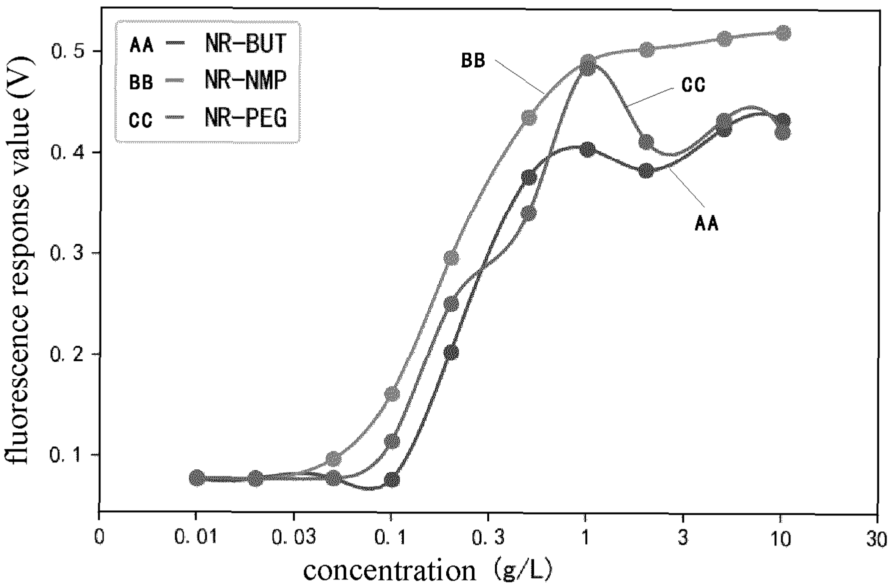


(B) NR probe composition

Fig. 4

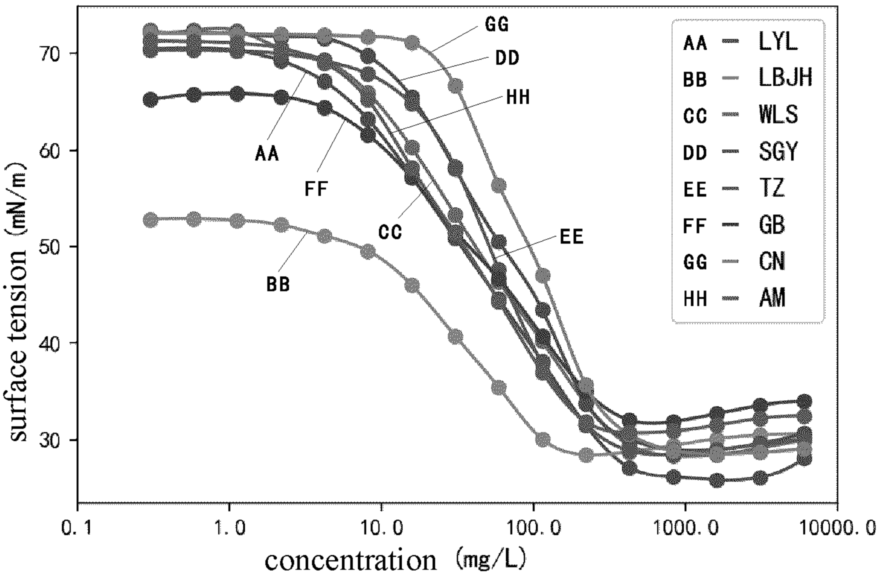

GG
DD
HH
AA
FF
CC
EE
BB
AA — LYL
BB — LBJH
CC — WLS
DD — SGY
EE — TZ
FF — GB
GG — CN
HH — AM
70
60
50
40
30
surface tension (mN/m)
0.1
1.0
10.0
100.0
1000.0
10000.0
concentration (mg/L)


Fig. 5

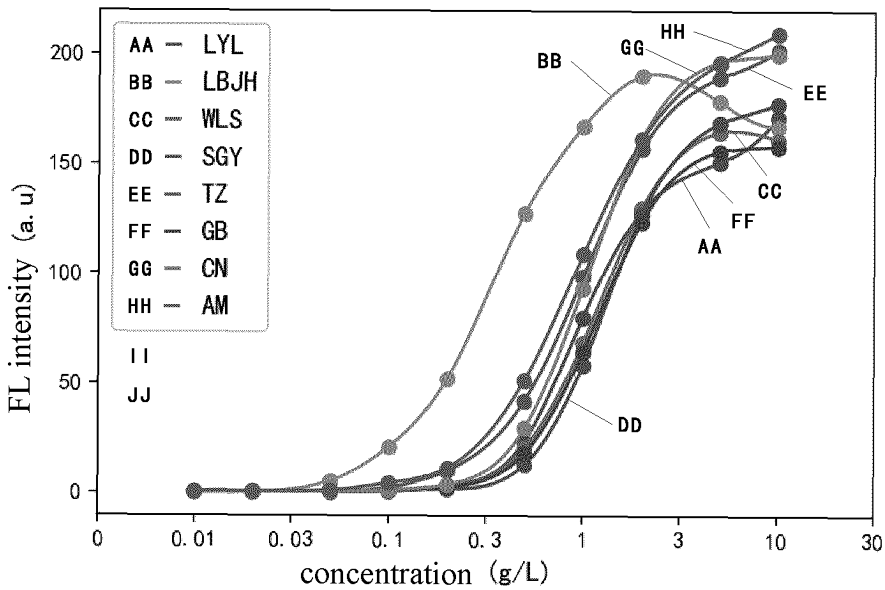


**(A)** CUR probe composition

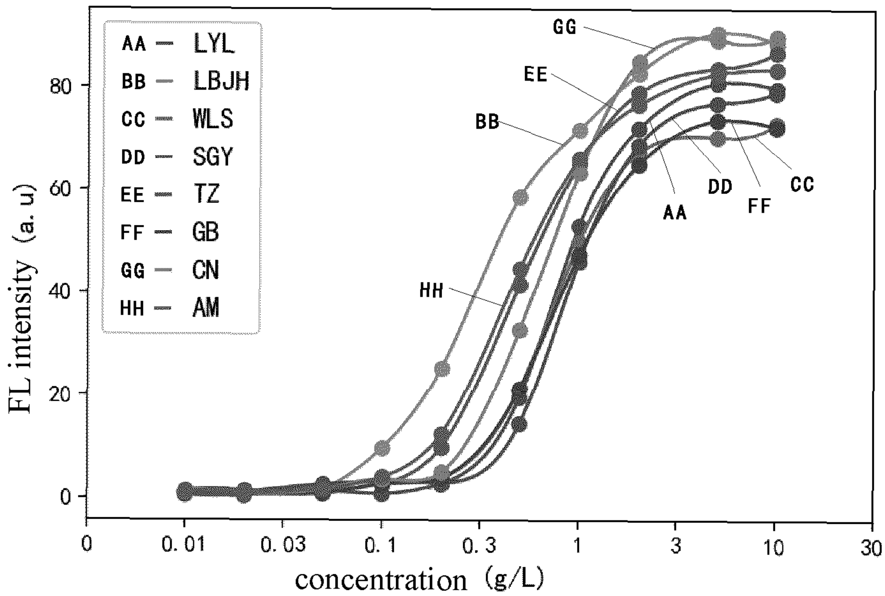


**(B)** NR probe composition

Fig. 6

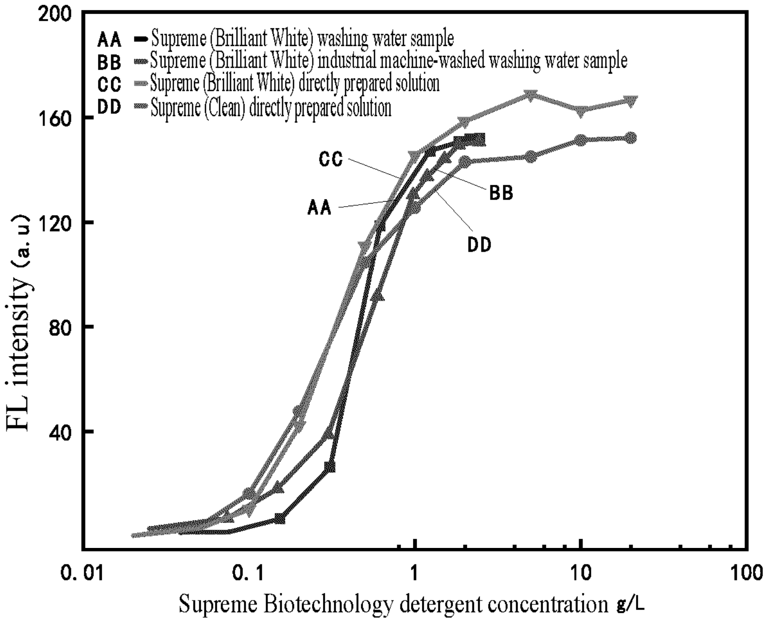


(A) CUR probe composition

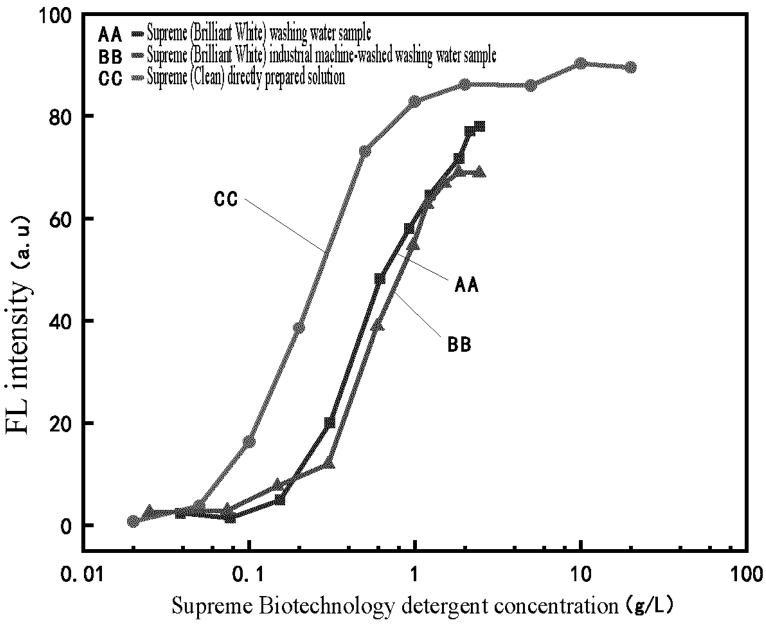


(B) NR probe composition

Fig. 7

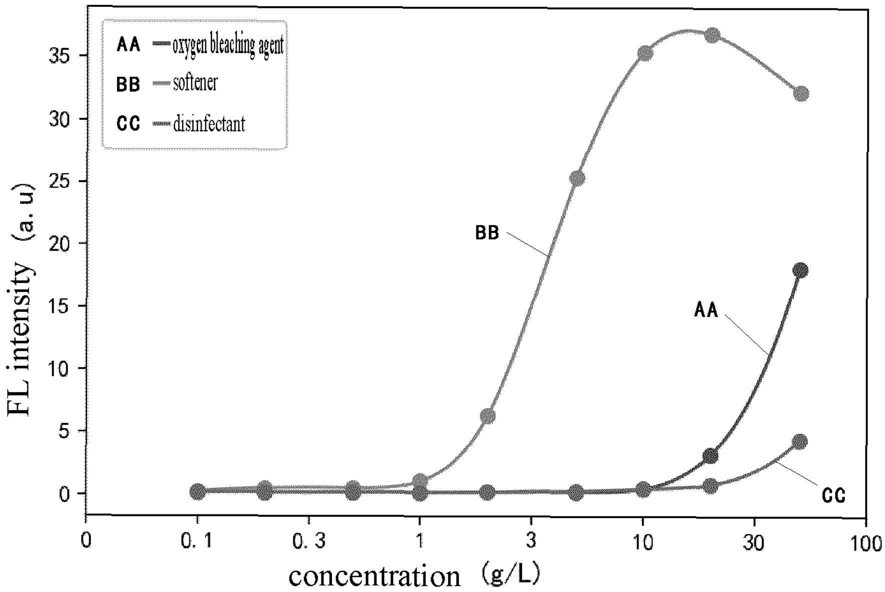


(A) CUR probe composition

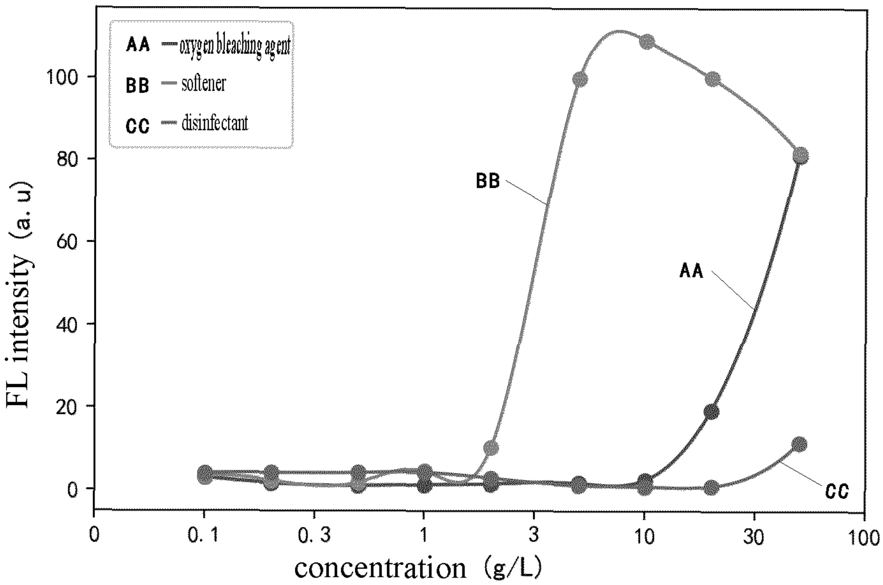


(B) NR probe composition

Fig. 8

# INTERNATIONAL SEARCH REPORT

International application No.
**PCT/CN2024/120646**

**A. CLASSIFICATION OF SUBJECT MATTER**

C09K 11/02 (2006.01)i; C09K 11/06 (2006.01)i; G01N 21/64 (2006.01)i

According to International Patent Classification (IPC)

**B. FIELDS SEARCHED**

Minimum documentation searched (classification system followed by classification symbols)

IPC: C09K11/-, G01N21/-

Documentation searched other than minimum documentation to the extent that such documents are included in the fields searched

Electronic data base consulted during the international search (name of data base and, where practicable, search terms used)

CJFD, CNTXT, ENTXTC, WPABSC, VEN, ISI: 聚集诱导荧光淬灭，临界胶束浓度, 表面活性剂, 探针, 姜黄素, 尼罗红, 香豆素, 罗丹明 B, 芘, 正丁醇, 乙二醇, 吡咯烷酮, 二甲基甲酰胺, 二乙二醇单乙醚, 聚乙二醇, 戊二醇, 乙醇酸乙酯, ACQ, aggregation caused quenching, cmc, critical micelle concentration, probe, surfactant, C480, DGME, DMF, NEP, NMP, NPN, NR, PEG, PYR, RhB

**C. DOCUMENTS CONSIDERED TO BE RELEVANT**

| Category* | Citation of document, with indication, where appropriate, of the relevant passages | Relevant to claim No. |
|---|---|---|
| X | CN 114133926 A (SOUTHWEST UNIVERSITY OF SCIENCE AND TECHNOLOGY), 04 March 2022 (04. 03.2022), description, paragraphs [0034]-[0037] | 1-10 |
| X | US 2014224993 A1 (NOH YOUNGWOOK et al.), 14 August 2014 (14.08.2014), description, paragraphs [0041] and [0069], and table 1 | 1-10 |
| A | CN 114133926 A (SOUTHWEST UNIVERSITY OF SCIENCE AND TECHNOLOGY), 04 March 2022 (04.03.2022), description, paragraphs [0034]-[0037] | 11-23 |
| A | US 2014224993 A1 (NOH YOUNGWOOK et al.), 14 August 2014 (14.08.2014), description, paragraphs [0041] and [0069], and table 1 | 11-23 |
| A | CN 112341453 A (SHANXI UNIVERSITY), 09 February 2021 (09.02.2021), description, paragraphs [0032]-[0043] | 1-23 |
| A | CN 115141220 A (FUDAN UNIVERSITY), 04 October 2022 (04.10.2022), description, paragraph [0053] | 1-23 |
| A | CN 113249115 A (NORTHWEST NORMAL UNIVERSITY), 13 August 2021 (13.08.2021), description, paragraph [0007] | 1-23 |

☐ Further documents are listed in the continuation of Box C. ☒ See patent family annex.

* Special categories of cited documents:

"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of the issuance of the international search report |
|---|---|
| 09 May 2025 | 19 May 2025 |
| Name and mailing address of the ISA/CN<br>STATE INTELLECTUAL PROPERTY OFFICE OF THE P.R.CHINA<br>6, Xitucheng Rd., Jimen Bridge, Haidian District, Beijing 100088 | Authorized officer<br>YANG, Sen<br>Telephone No. (+86) 010-53962347 |

Form PCT/ISA/210 (second sheet) (July 2022)

## INTERNATIONAL SEARCH REPORT
Information on patent family members

International application No.
**PCT/CN2024/120646**

*Note: related known patent family members of the patent documents referred to by this international search report are listed in this annex. This authority only provides information on the related patent family members, and assumes no responsibility for the details of the patents.*

| Patent Documents referred in the Report | Publication Date/Announcement Date (day/month/year) | Patent Family | Publication Date/Announcement Date (day/month/year) |
|---|---|---|---|
| CN 114133926 A | 04/03/2022 | None | |
| US 2014224993 A1 | 14/08/2014 | US 9360567 B2 | 07/06/2016 |
| CN 112341453 A | 09/02/2021 | None | |
| CN 115141220 A | 04/10/2022 | None | |
| CN 113249115 A | 13/08/2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 116554861 A


### Non-patent literature cited in the description


- Role of Curcumin on The Determination of The Critical Micellar Concentration by Absorbance, Fluorescence and Fluorescence Anisotropy Techniques. *J Photochem. Photobiol., B*, 2012, vol. 115 (3), 9-15
- Determination of Critical Micelle Concentration of CTAB by Pyrene Fluorescence Probe Spectrometry. *Petrochemical Technology & Application*, 2007, vol. 25 (1), 48-50
- Fluorescence Emission of Pyrene in Surfactant Solution. *Advance in Colloid and Interface Science*, 2015, vol. 215, 1-12